# EUROPÄISCHE PATENTSCHRIFT

(11) **EP 2 568 858 B1**
(45) Veröffentlichungstag und Bekanntmachung des Hinweises auf die Patenterteilung: **25.06.2014**
(21) Anmeldenummer: 11725858.2
(22) Anmeldetag: 10.05.2011
(51) Int. Cl.: A47J 31/44

(54) **KOMBINATION AUS EINER GETRÄNKEBEREITUNGSMASCHINE MIT EINER MILCHABGABEVORRICHTUNG UND EINEM MILCHKÜHLER MIT EINER ÜBERWACHUNG DES FÜLLSTANDS DER MILCH IM MILCHBEHÄLTER UND VERFAHREN ZUM ABGEBEN VON MILCH UND/ODER MILCHSCHAUM MITTELS EINER DERARTIGEN KOMBINATION**
COMBINATION UNIT COMPRISING A BEVERAGE PREPARATION MACHINE HAVING A MILK DISPENSING APPARATUS AND A MILK CHILLING DEVICE HAVING A MONITORING MEANS FOR THE FILLING LEVEL OF THE MILK IN THE MILK CONTAINER, AND METHOD FOR DISPENSING MILK AND/OR MILK FROTH BY MEANS OF A COMBINATION UNIT OF THIS KIND
COMBINAISON D'UNE MACHINE DE PRÉPARATION DE BOISSONS COMPORTANT UN DISPOSITIF DISTRIBUTEUR DE LAIT ET D'UN REFROIDISSEUR DE LAIT COMPORTANT UN DISPOSITIF DE SURVEILLANCE DU NIVEAU DE REMPLISSAGE DU LAIT DANS LE RÉCIPIENT DE LAIT, ET PROCÉDÉ SERVANT À DISTRIBUER DU LAIT ET/OU DE LA MOUSSE DE LAIT AU MOYEN D'UNE COMBINAISON DE CE TYPE

(30) Priorität: 10.05.2010 EP 10405100
(43) Veröffentlichungstag der Anmeldung: 20.03.2013
(73) Patentinhaber: JURA Elektroapparate AG, 4626 Niederbuchsiten (CH)
(72) Erfinder: REYHANLOO, Shahryar, 4573 Lohn-Ammannsegg (CH)
(74) Vertreter: EGLI-EUROPEAN PATENT ATTORNEYS
(86) Internationale Anmeldenummer: PCT/CH2011/000109
(87) Internationale Veröffentlichungsnummer: WO 2011/140667

(56) Entgegenhaltungen:
- EP-A1- 2 050 373
- EP-A2- 0 472 272
- EP-A2- 2 020 198
- WO-A1-2007/019993
- WO-A1-2008/077264
- DE-U1-202004 007 987

## Beschreibung

Die Erfindung bezieht sich auf eine Kombination aus einer mit einer Milchabgabevorrichtung zur Abgabe von Milch und/oder Milchschaum ausgerüsteten Getränkebereitungsmaschine und einem separaten Milchkühler zur gekühlten Bevorratung eines Milchvolumens und ein Verfahren zum Abgeben von Milch und/oder Milchschaum mittels einer derartigen Kombination.

Es sind Getränkebereitungsmaschinen bekannt, bei welchen Milch und/oder Milchschaum zur Zubereitung von unterschiedlichen Kaffeespezialitäten, wie beispielsweise Latte Macchiato oder Cappuccino, in einer Milchabgabevorrichtung der Getränkebereitungsmaschine erzeugt werden. Hierzu wird ein Milchvolumen über einen Milchschlauch aus einem Milchbehälter in beispielsweise eine Aufschäumvorrichtung der Milchabgabevorrichtung angesaugt. Das Ansaugen wird mithilfe des Venturi-Prinzips realisiert. In die Aufschäumvorrichtung angesaugt, wird dann Milchschaum erzeugt und/oder das Milchvolumen lediglich erwärmt.

Falls zu wenig oder gar keine Milch im Milchbehälter bevorratet ist, jedoch der Ablauf eines Milchvolumenbezugs in einer Steuerung der Getränkebereitungsmaschine fest programmiert ist, werden unzureichende Kaffeespezialitäten abgegeben. Mit anderen Worten, erhält der Benutzer ein herkömmlich zubereitetes Kaffeegetränk ohne oder mit zu wenig Milch und/oder Milchschaum. Dies ist für den Benutzer unbefriedigend, da der gesamte Vorgang zum Zubereiten einer gewünschten Kaffeespezialität nochmals wiederholt werden muss. Erst mit einem ausreichend gefüllten Milchbehälter kann er dann die perfekt zubereitete Kaffeespezialität erhalten.

Die zuvor abgegebene unvollständige Kaffeespezialität wird oftmals weggeschüttet. Hierdurch werden Ressourcen, beispielsweise Kaffeebohnen, das (unzureichende) Milchvolumen, Wasser und Energie, verschwendet. Zudem wird dem Benutzer zugemutet, unnötig viel Zeit zur letztendlichen Zubereitung der Kaffeespezialität zu verbringen.

Ein besonders grosser Nachteil ist darin zu sehen, wenn der Benutzer für den Bezug der gewünschten Kaffeespezialität zuvor einen festgelegten Geldbetrag gezahlt hat, er dann jedoch eine unzureichende Kaffeespezialität zubereitet bekommt. Insbesondere in Bürogebäuden oder im Gastrobereich sind sogenannte Münz-Kaffeemaschinen aufgestellt, welche die Kaffeespezialität erst nach Einzahlung eines festgelegten Geldbetrages abgeben. Diese Einzahlung kann durch Einwerfen von Münzen in einen Münzschlitz der Maschine oder durch Abbuchung eines festgelegten Geldbetrages von einem virtuellen Geldkonto, welches über ein Magnetkartensystem geführt wird, realisiert werden. Eine unzureichend abgegebene Kaffeespezialität, für die jedoch zuvor ausreichend bezahlt wurde, führt zu einer Unzufriedenheit der Benutzer und zu aufwendigen und zeitraubenden Reklamationsabläufen. Möglicherweise werden diese Münz-Kaffeemaschinen daraufhin gemieden. Eine unzureichend gefertigte Kaffeespezialität hat somit auch negative finanzielle Auswirkungen.

Ein unzureichend aufgefüllter Milchbehälter hat im Verlaufe der Zubereitung von der Kaffeespezialität eine Unterbrechung der Milchzufuhr zur Folge. Hierdurch ist der Bezug eines homogenen Milchaustrittsstrahls aus einer Düse der Milchabgabevorrichtung unterbrochen. Diese Unterbrechung hat eine unkontrollierte Milch-/Dampfausgabe aus der Düse zur Folge, wodurch Milch, Wasser und Dampf unvorhersehbar in alle Richtungen spritzen. Hierdurch können Kleidungsstücke des Benutzers verunreinigt werden. Zudem kann der Benutzer mit der heissen Milch-/Dampfausgabe direkt in Kontakt kommen und sich hierbei Verbrennungen oder Verbrühungen zuziehen. Ein weiterer Nachteil besteht darin, dass die Frontseite der Getränkebereitungsmaschine durch Milch-, Wasser- und Dampfspritzer verunreinigt werden kann.

Zur Lösung des Problems kann der Benutzer im Vorfeld der Zubereitung seiner gewünschten Kaffeespezialität den Füllstand der Milch im Milchbehälter kontrollieren. Üblicherweise sind die Milchbehälter jedoch nicht transparent, sodass der Benutzer den Füllzustand der Milch im Milchbehälter lediglich unter Aufbringung eines hohen Aufwandes kontrollieren kann. Bei den Münz-Kaffeemaschinen in Bürogebäuden oder im Gastrobereich sind oftmals überhaupt keine Vorkehrungen getroffen, welche es dem Benutzer erlauben den Füllzustand des Milchbehälters im Vorfeld der Zubereitung seiner gewünschten Kaffeespezialität zu kontrollieren.

Die bereitgestellte Milch sollte möglichst gekühlt bevorratet werden. Hierzu wird vielfach ein Thermobehälter, beispielsweise eine doppelwandige Konstruktion mit einem Vakuum-Zwischenraum, oder ein Kühlschrank mit einem geringen Aufnahmevolumen verwendet, welcher beispielsweise ein Peltier-Element enthält. Bei diesen Milchbehältern ist jedoch überhaupt keine Kontrolle des Füllzustandes möglich, ohne dass hierzu jedes Mal der Milchbehälter geöffnet werden muss. Dies ist, falls überhaupt möglich, einerseits unpraktisch und wird zudem meistens vergessen.

WO 2008/077264 A1 offenbart ein Verfahren zur Abgabe von Milchportionen in Getränkebereitungsmaschinen mit einer Milchfüllstandsüberwachungseinrichtung für einen Milchbehälter beispielhaft anhand einer für die Bereitung von Cappuccino vorgesehenen Kaffeemaschine in Kombination mit einem separat neben der jeweiligen Kaffeemaschine platzierbaren Milchbehälter, sowie eine Milchfüllstandsüberwachungseinrichtung für den jeweiligen Milchbehälter. Die Milchfüllstandsüberwachungseinrichtung umfasst einen Füllzustands-Sensor, welcher einen elektrisch leitfähigen, an einem Deckel des Milchbehälters befestigten Messstab aufweist. Wenn der Deckel auf den Milchbehälter aufgesetzt ist, ragt der Messstab derart in den Milchbehälter, dass ein unteres Ende des Messstabs einen vorgegebenen Abstand vom Boden des Milchbehälters aufweist. Die jeweils im Milchbehälter enthaltene Milch ist aus dem Milchbehälter über ein Ansaugrohr absaugbar, welches an seinem unteren Ende eine Ansaugöffnung aufweist, wobei die Ansaugöffnung näher am Boden des Milchbehälters angeordnet ist als das untere Ende des Messstabs. Der Füllzustands-Sensor ermöglicht die Erfassung des Füllstands der Milch im Milchbehälter mittels einer Messung der elektrischen Leitfähigkeit zwischen dem Messstab und einem zweiten elektrisch leitfähigen Körper, welcher selbst dann noch mit der Milch im Milchbehälter in Kontakt ist, wenn der Füllstand der Milch unter das untere Ende des Messstabs fallen sollte. Als "zweiter elektrisch leitfähiger Körper" kann im vorliegenden Fall beispielsweise der die Milch aufnehmende Behälter selbst oder das Ansaugrohr vorgesehen sein, falls der Behälter bzw. das Ansaugrohr aus einem entsprechenden Werkstoff (beispielsweise einem Metall) gefertigt sind. Die elektrische Leitfähigkeit zwischen dem Messstab und dem zweiten elektrisch leitfähigen Körper (Behälter bzw. Ansaugrohr) variiert in diesem Fall als Funktion des Füllstands der Milch, wobei diese Leitfähigkeit abrupt fällt, wenn der Füllstand der Milch unter das untere Ende des Messstabs sinkt. Zur Überwachung des Füllstands sind gemäss WO 2008/077264 A1 zwei verschiedene Varianten vorgesehen.

In einer ersten Variante sind der Messstab und der genannte zweite elektrisch leitfähige Körper (Behälter bzw. Ansaugrohr) über eine Signalleitung elektrisch mit der Steuerungselektronik der Kaffeemaschine verbunden, sodass die Steuerungselektronik der Kaffeemaschine die elektrische Leitfähigkeit zwischen dem Messstab und dem zweiten elektrisch leitfähigen Körper (Behälter bzw. Ansaugrohr) bestimmen und auswerten kann. In diesem Fall hat also die Steuerungselektronik der Kaffeemaschine die Funktion einer "Füllzustands-Messelektronik", welche zur Erzeugung eines "Füllzustandsinformationssignals" dient, wobei das Füllzustandsinformationssignal eine Information über den vom Füllzustands-Sensor erfassten Füllstand enthält. Diese Variante hat den Vorteil, dass die Steuerungselektronik der Kaffeemaschine selbst über das Füllzustandsinformationssignal verfügt und somit eine Entnahme von Milch aus dem Milchbehälter in Abhängigkeit von dem Füllstand der Milch steuern kann. Dabei wird Milch über einen Schlauch aus dem Milchbehälter gesaugt und einem Milchaufschäumer der Kaffeemaschine zugeführt, allerdings vorteilhafterweise nur unter der Bedingung, dass der Füllstand ausreicht, um dem Milchbehälter die für die Erzeugung eines Cappuccino benötigte Menge Milch entnehmen zu können. Nachteilig an dieser Variante ist allerdings, dass der Füllzustands-Sensor bzw. der Messstab und der zweite elektrisch leitfähige Körper (Behälter bzw. Ansaugrohr) über die Signalleitung elektrisch mit der Steuerungselektronik der Kaffeemaschine verbunden sein müssen. Dies ist für einen Benutzer unbequem, insbesondere bei einer Reinigung des Milchbehälters, zumal dabei die Gefahr besteht, die Signalleitung zu beschädigen oder eine elektrische Verbindung zwischen der Signalleitung und der Kaffeemaschine und/oder dem Milchbehälter zu unterbrechen (mit dem Ergebnis, dass die Steuerungselektronik der Kaffeemaschine den Füllstand der Milch nicht mehr erfassen könnte). Weiterhin ist die Freiheit, den Milchbehälter zu platzieren, durch die Signalleitung zusätzlich eingeschränkt, zumal der Milchbehälter zwingend über einen Schlauch mit der Kaffeemaschine verbunden sein muss, sodass ein Benutzer jeweils die Anordnung des Schlauchs und der Signalleitung beachten muss.

In einer zweiten Variante der Milchfüllstandsüberwachungseinrichtung gemäss WO 2008/077264 A1 ist eine externe Auswertungselektronik am Milchbehälter selbst angeordnet, wobei eine Füllzustandsinformation auf einer Anzeige der Auswertungselektronik angezeigt wird. Die Anzeige dient lediglich dazu, einen Benutzer über den Füllstand zu informieren, sodass ein Benutzer erkennen kann, ob der Milchbehälter genügend Milch enthält oder ob der Milchbehälter gefüllt werden muss. Die Füllzustandsinformation wird in diesem Fall nicht zur Steuerung der Kaffeemaschine verwendet. Diese zweite Variante hat deshalb den Nachteil, dass die Steuerungselektronik der Kaffeemaschine einen Bezug von Milch aus dem Milchbehälter nicht automatisch verhindern kann, wenn der Füllstand der Milch derart gesunken ist, dass die im Milchbehälter vorhandene Menge Milch geringer als diejenige Menge Milch ist, welche für die Bereitung eines bestimmten Getränks benötigt wird.

Der vorliegenden Erfindung liegt die Aufgabe zugrunde, die genannten Nachteile zu vermeiden und eine Getränkebereitungsmaschine in Kombination mit einem Milchkühler und ein Verfahren zum Abgeben von Milch und/oder Milchschaum mittels einer derartigen Kombination bereitzustellen, sodass eine Zubereitung einer Kaffeespezialität mit einer hierzu ausreichenden Milchabgabe möglich ist, wobei eine Abgabe von Milch und/oder Milchschaum abhängig vom Füllstand der Milch im Milchbehälter mit einer benutzerfreundlichen, einfach zu handhabenden Überwachungseinrichtung automatisch kontrollierbar sein soll.

Diese Aufgabe wird durch eine Kombination aus einer Getränkebereitungsmaschine zur Bereitung eines Getränks und einem separaten Milchkühler zur gekühlten Bevorratung eines Milchvolumens mit den Merkmalen des Patentanspruchs 1 gelöst. Die Aufgabe wird weiterhin durch ein Verfahren zum Abgeben von Milch und/oder Milchschaum mittels einer Kombination aus einer Getränkebereitungsmaschine und einem Milchkühler zur gekühlten Bevorratung eines Milchvolumens nach Patentanspruch 13 gelöst.

Dabei umfasst die Getränkebereitungsmaschine eine Steuerungselektronik und eine einen Milcheinlass aufweisende Milchabgabevorrichtung zur Abgabe von Milch und/oder Milchschaum. Der Milchkühler umfasst ein Gehäuse, einen im Gehäuse angeordneten Milchbehälter zur Aufnahme des Milchvolumens, eine Kühleinheit zum Kühlen des Milchvolumens und eine Milchlanze mit einem in den Milchbehälter ragenden Ende und einem mit einem Milchauslass des Milchkühlers in Fluidverbindung stehen Ende zur Entnahme von Milch aus dem Milchbehälter, wobei der Milcheinlass der Milchabgabevorrichtung mit dem Milchauslass des Milchkühlers mittels einer Milchleitung verbunden oder verbindbar ist.

Weiterhin ist eine Überwachungseinrichtung zum Überwachen eines Füllzustands des Milchbehälters vorhanden, welche einen im Milchbehälter und/oder im Gehäuse des Milchkühlers angeordneten Füllzustands-Sensor zum Erfassen eines Füllstands der Milch im Milchbehälter und eine mit dem Füllzustands-Sensor verbundene Füllzustands-Messelektronik zur Erzeugung eines Füllzustandsinformationssignals umfasst, welches Füllzustandsinformationssignal eine Information über den vom Füllzustands-Sensor erfassten Füllstand enthält, wobei eine Abgabe der Milch und/oder des Milchschaums aus der Milchabgabevorrichtung mittels der Steuerungselektronik der Getränkebereitungsmaschine in Abhängigkeit von dem von der Füllzustands-Messelektronik erzeugten Füllzustandsinformationssignal steuerbar ist.

Gemäss der Erfindung ist die Füllzustands-Messelektronik im oder am Gehäuse des Milchkühlers angeordnet ist. Weiterhin umfasst der Milchkühler einen Sender zum Übertragen des von der Füllzustands-Messelektronik erzeugten Füllzustandsinformationssignals an die Getränkebereitungsmaschine über eine Luftschnittstelle mittels eines vom Sender erzeugbaren Funksignals. Entsprechend umfasst die Getränkebereitungsmaschine einen Sender/Empfänger, welcher dazu ausgelegt ist, das vom Sender des Milchkühlers erzeugte Funksignal zu empfangen und das mittels des Funksignals übertragene Füllzustandsinformationssignal der Steuerungselektronik der Getränkebereitungsmaschine bereitzustellen.

Dadurch, dass die Füllzustands-Messelektronik im oder am Gehäuse des Milchkühlers angeordnet ist, wird erreicht, dass ein mithilfe des Füllzustands-Sensors erfassbarer Füllstand der Milch mittels der Füllzustands-Messelektronik bereits im Milchkühler in ein Signal ("Füllzustandsinformationssignal") umgesetzt werden kann, welches eine Information über den Füllstand enthält und mit elektronischen Mitteln verarbeitet werden kann. In diesem Fall kann ein Füllzustandsinformationssignal demnach im Milchkühler bereitgestellt werden, ohne dass der Füllzustands-Sensor über eine Signalleitung mit der Getränkebereitungsmaschine verbunden sein muss. Dadurch ist die Voraussetzung dafür geschaffen, eine Information über einen vom Füllzustands-Sensor erfassten Füllstand mittels eines Funksignals zur Getränkebereitungsmaschine zu Übertragen. Weiterhin wird die Steuerungselektronik der Getränkebereitungsmaschine nicht benötigt, um einen vom Füllzustands-Sensors erfassbarer Füllstand messtechnisch zu erfassen und in ein mit elektronischen Mitteln verarbeitbares Füllzustandsinformationssignal umzusetzen.

Dadurch, dass der Milchkühler einen Sender zum Übertragen des von der Füllzustands-Messelektronik erzeugten Füllzustandsinformationssignals mittels eines vom Sender erzeugbaren Funksignals umfasst und die Getränkebereitungsmaschine einen Sender/Empfänger zum Empfangen des vom Sender des Milchkühlers erzeugten Funksignals umfasst, wird erreicht, dass der Steuerungselektronik der Getränkebereitungsmaschine eine Information über den jeweiligen Füllstand der Milch im Milchkühler zur Verfügung gestellt werden kann, ohne eine Signalleitung zwischen dem Milchkühler und der Getränkebereitungsmaschine zu benötigen.

Dadurch, dass eine Abgabe der Milch und/oder des Milchschaums aus der Milchabgabevorrichtung mittels der Steuerungselektronik der Getränkebereitungsmaschine in Abhängigkeit von dem von der Füllzustands-Messelektronik erzeugten Füllzustandsinformationssignal steuerbar ist, wird erreicht, dass der Füllzustand des Milchbehälters des Milchkühlers automatisch überwacht wird und hierzu Signale, welche eine Information über den Füllzustand enthalten, vom Sender des Milchkühlers zum Sender/Empfänger der Getränkebereitungsmaschine übertragen werden. Der Füllzustand des Milchbehälters wird somit kontinuierlich überwacht. Sinkt der Füllstand des Milchvolumens im Milchbehälter unterhalb eines notwendigen Milchvolumens ab, welches zur Zubereitung einer jeweils ausgewählten Kaffeespezialität notwendig ist, wird das Milchprodukt nicht gestartet. Ändert sich das Signal im Verlaufe des Milchbezuges ("zu wenig Milch"), kann die Milchförderung sofort gestoppt oder unterbrochen werden. Alternativ kann ein genügend dimensioniertes Nachlaufvolumen sichergestellt werden, welches dazu ausreicht, dass der Bezug und somit die Zubereitung der Kaffeespezialität sicher zu Ende geführt werden können. Nachdem Milch nachgefüllt wurde, können kann anschliessende Bezüge vorgenommen werden. Bei einem unzureichenden Füllstand des Milchvolumens im Milchkühler können weiterhin Kaffeeprodukte bezogen werden, welchen keine Milch hinzugefügt werden muss, z.B. schwarzer Kaffee oder Espresso.

Durch die Funkübertragung zwischen einem Sender des Milchkühlers und dem Sender/Empfänger der Getränkebereitungsmaschine kann eine leitungsgebundene Verbindung zwischen dem Milchkühler und der Getränkebereitungsmaschine vermieden werden. Ein besonderer Vorteil besteht darin, dass somit auf die Verwendung eines Kabels verzichtet werden kann, welches bei einem wiederholten Öffnen und Schliessen des Gehäuses des Milchkühlers stören würde. Das Öffnen und Schliessen des Gehäuses ist zum Einfüllen oder Nachfüllen eines Milchvolumens in den Milchbehälter immer wieder notwendig. Ein weiterer Vorteil der Funkübertragung besteht darin, dass die Getränkebereitungsmaschine und der Milchkühler in Relation zueinander flexibler positioniert werden können. Zudem können problemlos weitere optionale Einrichtungen eingebunden werden, welche mit der Getränkebereitungsmaschine bidirektional Daten austauschen oder unidirektional Daten an die Getränkebereitungsmaschine senden.

Beispielsweise enthält die Kombination einen Milchschlauch, welcher zwischen einem Milchauslass an der Aussenseite des Milchkühlers und einem Milcheinlass an einer Milchabgabevorrichtung der Getränkebereitungsmaschine gekoppelt ist. Hierdurch wird zuverlässig ein zur Zubereitung einer Kaffeespezialität notwendiges Milchvolumen über den Milchschlauch in die Milchabgabevorrichtung angesaugt. Der Milchschlauch sollte sowohl am Milcheinlass als auch am Milchauslass leicht entnehmbar gekoppelt sein. Hierdurch kann der Milchschlauch leicht entnommen werden und einer schnellen aber dennoch gründlichen Reinigung unterzogen werden. Ein weiterer Vorteil der Verwendung des Milchschlauchs besteht darin, dass dieser besonders flexibel ist, sodass die Getränkebereitungsmaschine und der Milchkühler in Relation zueinander einfach und flexibel positionierbar sind.

Im Falle einer Ausführungsform des Milchkühlers weist das Gehäuse des Milchkühlers einen den Milchbehälter umfassenden Milchbehälterkörper und einen Deckel zum Verschliessen oder Bedecken des Milchbehälters auf. Dabei kann der Deckel mit einem Ende der Milchlanze derart verbunden sein, dass die Milchlanze im Wesentlichen vollständig in den Milchbehälter hineinragt, wenn der Deckel derart angeordnet ist, dass er den Milchbehälter bedeckt oder verschliesst. Somit wird die Milchlanze einfach aus dem Milchvolumen entnommen, sobald der Deckel von dem Milchbehälter abgehoben wird. Ein Vorteil der an der Unterseite des Deckels angebrachten Milchlanze besteht darin, dass diese schnell und einfach unter beispielsweise fliessend Wasser gereinigt und gespült werden kann. Zum Verschliessen und Öffnen des Deckels kann ein jeglicher Verschlussmechanismus genutzt werden, wie beispielsweise ein Drehverschluss oder Schnappverschluss.

Der Milchauslass ist an der Aussenoberfläche des Deckels angebracht. Hierdurch wird, von dem Milchbehälter ausgehend, ein Fluiddurchgang über die Milchlanze an den Milchauslass gebildet. Der Milchauslass ist mit einem Ende eines Milchschlauches koppelbar, dessen weiteres Ende mit einer Milchabgabevorrichtung der Getränkebereitungsmaschine koppelbar ist. Die Position des Milchauslasses an der Aussenoberfläche des Deckels sollte für den Benutzer gut zugänglich sein, sodass dieser den Milchschlauch schnell und einfach an- und abkoppeln kann. Der Milchauslass kann hierzu beispielsweise an einem Umfangsbereich des Deckels angebracht sein.

Beispielsweise kann der Füllzustands-Sensor an einem Umfangsbereich der Milchlanze angebracht sein. Hierdurch wird es ermöglicht, dass der Füllzustands-Sensor dauerhaft mit dem Milchvolumen in Kontakt steht und somit den Füllzustand des Milchbehälters zuverlässig erfassen kann, wenn der Deckel derart angeordnet ist, dass er den Milchbehälter bedeckt oder verschliesst. Im Zuge der Reinigung und Spülung können zugleich die Milchlanze als auch der Füllzustands-Sensor gereinigt werden.

Beispielsweise kann der gesamte Fluiddurchgang - beginnend vom Ansaugen der Milch bis zum Austritt der Milch am Milchauslass - als eine vom Deckelkörper separierbare Einheit ausgebildet sein. Diese Einheit kann schnell und einfach vom Deckelkörper getrennt werden und einer separaten, ausreichenden Reinigung und Spülung unterzogen werden. Somit kann insbesondere der ansonsten schwer zugängliche Fluiddurchgang sehr zuverlässig gespült und gereinigt werden.

Vorzugsweise sind die Füllzustands-Messelektronik und/oder der Sender in dem Deckel enthalten. Hierdurch kann der Füllzustands-Sensor dauerhaft unterbrechungsfrei mit der Füllzustands-Messelektronik, welche im Deckel untergebracht ist, elektrisch verbunden werden. Die hierzu notwendige elektrische Verbindung (z.B. eine oder mehrere Leitungen) hat eine nur geringe Länge und verläuft im Wesentlichen entlang der Milchlanze. Diese Verbindung kann an einem Umfangsbereich der Milchlanze angebracht sein. Alternativ kann sie innerhalb von einer Vertiefung, welche in Längsrichtung der Milchlanze eingebracht ist, einbettet sein. Alternativ kann sie gänzlich im Material der Milchlanze eingebettet sein. In einem Fall, bei welchem die elektrische Verbindung nicht im Material der Milchlanze eingebettet ist, sollte diese elektrische Verbindung isoliert sein, um Messwertfehler zu vermeiden. Die Füllzustands-Messelektronik und/oder der Sender können in einer Ausnehmung innerhalb des Deckels untergebracht sein, welche, beispielsweise durch eine Klappe verschlossen, frei zugänglich ist. Alternativ können die Füllzustands-Messelektronik und/oder der Sender im Material des Deckels vergossen sein. Bei beiden Beispielen ist es wichtig, dass diese elektronischen Bauelemente gegen Feuchtigkeit, beispielsweise gegen Milch oder Wasser, geschützt sind. Insbesondere beim Reinigen des Deckels mit fliessend Wasser kann schnell Feuchtigkeit eindringen.

Im Falle der zuvor erwähnten Anbringung der Milchlanze an der vom Deckelkörper separierbaren Einheit muss jedoch eine elektrische Schnittstelle zwischen der separierbaren Einheit und dem Hauptkörper des Deckels bereitgestellt werden um eine elektrische Verbindung zwischen dem Füllzustands-Sensor und der Füllzustands-Messelektronik herstellen zu können.

Vorzugsweise ist der Füllzustands-Sensor an einer Sensorlanze angebracht, welche derart an der Unterseite des Deckels befestigt ist, dass sie im Wesentlichen vollständig in den Milchbehälter hineinragt, wenn der Deckel derart angeordnet ist, dass er den Milchbehälter bedeckt oder verschliesst. Der Füllzustands-Sensor kann am distalen Ende der Sensorlanze angebracht sein und ist dauerhaft elektrisch mit der im Deckel enthaltenen Füllzustands-Messelektronik verbunden. Hierdurch kann die Anbringung der zuvor erwähnten elektrischen Schnittstelle zwischen der separierbaren Einheit und dem Hauptkörper des Deckels vermieden werden. Die besonders einfache und direkte elektrische Verbindung, welche ohne Schnittstelle auskommt, ist durch die besonders vorteilhafte Eingliederung der elektronischen Bauelemente (Füllzustands-Messelektronik und Sender) im Deckel und die Anbringung des Füllzustands-Sensors an der Sensorlanze ermöglicht. Hierdurch sind mögliche Fehlerquellen, beispielsweise hervorgerufen durch eine Verunreinigung einer Schnittstelle durch Milchrückstände, usw., ausgeschlossen.

Vorzugsweise sind die Füllzustands-Messelektronik und/oder der Sender über zumindest einen Energiespeicher, insbesondere eine Batterie oder ein Akkumulator, mit elektrischer Energie versorgbar. Der Energiespeicher kann im oder am Gehäuse des Milchkühlers angeordnet sein.

Beispielsweise kann der Energiespeicher in dem Deckel enthalten und elektrisch mit der Füllzustands-Messelektronik und/oder dem Sender verbunden sein. Somit erhalten diese elektronischen Bauelemente direkt ihre eigene Niederspannungs-Stromversorgung. Ein Vorteil der Anordnung der elektronischen Bauelemente zugleich mit ihrer Niederspannungs-Stromversorgung im Deckel des Milchkühlers besteht darin, dass keinerlei Schnittstellen bzw. Steckerelemente bereitgestellt werden müssen.

Vorzugsweise sind die Füllzustands-Messelektronik und/oder der Sender über eine an den Milchbehälterkörper koppelbare externe elektrische Energiequelle mit elektrischer Energie versorgbar. Hierbei besteht ein Vorteil darin, dass der zuvor genannte Energiespeicher, beispielsweise eine Batterie oder ein Akkumulator, im Deckel eingespart werden kann, wodurch das Gewicht des Deckels wesentlich reduziert wird. Ein hohes Gewicht des Deckels kann für den Benutzer beim Einfüllen oder Nachfüllen eines Milchvolumens störend sein. Zudem wird hierdurch ein Austausch von verbrauchten Batterien oder ein Nachladen des Akkumulators vermieden. Insgesamt ermöglicht dieses Beispiel eine Reduktion des Gewichts des Deckels sowie eine Zeit- und Kosteneinsparung. Zudem ist die im Milchbehälterkörper umfasste Kühleinheit zum Kühlen des Milchvolumens üblicherweise ohnehin über eine externe elektrische Energiequelle mit elektrischer Energie versorgt. Die externe elektrische Energiequelle ist beispielsweise als eine über eine Steckdose zugeführte Netzspannung ausgeführt. Diese Netzspannung (beispielsweise eine 230 Volt/50 Hertz Wechselspannung) kann direkt über ein an den Milchbehälterkörper koppelbares Netzkabel zugeführt werden. Diese Netzspannung kann dann durch ein ebenfalls im Milchbehälterkörper enthaltenes Schaltnetzteil auf eine den elektronischen Bauelementen angepasste Gleichstrom-Niederspannungsversorgung umgewandelt werden. Alternativ kann die externe elektrische Energiequelle als eine bereits extern umgewandelte Gleichstrom-Niederspannungsversorgung ausgeführt sein, welche beispielsweise durch ein Steckernetzteil bereit gestellt wird.

Vorzugsweise ist die externe elektrische Energiequelle über eine Energieversorgungs-Schnittstelle zwischen dem Milchbehälterkörper und dem Deckel elektrisch mit der Füllzustands-Messelektronik und/oder dem Sender koppelbar. Somit sind diese elektronischen Bauelemente auch ohne einen im Deckel angeordneten Energiespeicher mit elektrischer Energie versorgt, wenn der Deckel derart angeordnet ist, dass er den Milchbehälter bedeckt oder verschliesst. Hierdurch wird das Gewicht des Deckels reduziert.

Vorzugsweise enthält die Energieversorgungs-Schnittstelle wenigstens zwei Schnittstellenelemente, welche jeweils am Milchbehälterkörper und Deckel derart ausgerichtet und angeordnet sind, dass sie miteinander elektrisch verbunden sind, wenn der Deckel derart angeordnet ist, dass er den Milchbehälter bedeckt oder verschliesst. Diese besonders einfache Ausgestaltung der Energieversorgungs-Schnittstelle ermöglicht eine Versorgung der im Deckel umfassten elektronischen Bauelemente mit elektrischer Energie, welche von einer an den Milchbehälterkörper koppelbaren externen elektrischen Energiequelle (beispielsweise die Netzspannung aus der Steckdose) zugeführt ist. Der Deckel kann jedoch weiterhin vom Milchbehälterkörper bzw. Milchkühler entnommen werden (beispielsweise zum Auffüllen oder Nachfüllen eines Milchvolumens oder zum Reinigen und Spülen des Deckels). In diesem Fall sind die im Deckel umfassten elektronischen Bauelemente selbstverständlich elektrisch von der externen elektrischen Energiequelle getrennt. Nur im Betriebszustand (d.h. wenn der Deckel derart angeordnet ist, dass er den Milchbehälter bedeckt oder verschliesst) sind die elektronischen Bauelemente zuverlässig mit der externen elektrischen Energiequelle elektrisch verbunden.

Vorzugsweise sind die Füllzustands-Messelektronik und/oder der Sender im Milchbehälterkörper enthalten. In dieser alternativen Ausführungsform sind die elektronischen Bauelemente nunmehr nicht im Deckel umfasst. Ein Vorteil besteht darin, dass dieser somit unabhängig von der Vorgabe einer Unterbringung der elektronischen Bauelemente (beispielsweise innerhalb einer darin eingebrachten Aussparung, welche durch eine Klappe verschlossen wird, oder durch vollständiges Einschmelzen) entworfen werden kann. Ferner ermöglicht die Unterbringung der elektronischen Bauelemente innerhalb des Milchbehälterkörpers einen besseren Zugriff auf die elektronischen Bauelemente. Somit ist eine einfache und schnelle Wartung im Falle des Auftretens eines Fehlers möglich.

Vorzugsweise sind die Füllzustands-Messelektronik und/oder der Sender dauerhaft über eine an den Milchbehälterkörper koppelbare externe elektrische Energiequelle mit elektrischer Energie versorgbar. Somit können diese elektronischen Bauelemente ohne die in der vorherigen Ausführungsform beschriebene Energieversorgungs-Schnittstelle mit elektrischer Energie versorgt werden.

Beispielsweise ist der Füllzustands-Sensor über eine Sensor-Schnittstelle zwischen dem Milchbehälterkörper und dem Deckel elektrisch mit der Füllzustands-Messelektronik koppelbar. Somit kann der Füllzustands-Sensor schnell und einfach mit der im Milchbehälterkörper angeordneten Füllzustands-Messelektronik verbunden werden, indem der Deckel auf den Milchbehälterkörper aufgesetzt wird.

Beispielsweise enthält die Sensor-Schnittstelle wenigstens zwei Schnittstellenelemente, welche jeweils am Milchbehälterkörper und Deckel derart ausgerichtet und angeordnet sind, dass sie miteinander elektrisch verbunden sind, wenn der Deckel derart angeordnet ist, dass er den Milchbehälter bedeckt oder verschliesst. Gegenüber der ersten Ausführungsform, bei welcher die elektronischen Bauelemente im Deckel umfasst sind, ist bei dieser zweiten Ausführungsform die Energieversorgungs-Schnittstelle durch die Sensor-Schnittstelle ausgetauscht. Diese Schnittstelle überführt hierbei jedoch keine elektrische Energie zur Stromversorgung der elektronischen Bauelemente. Vielmehr werden hier Sensorsignale mit geringer Spannungsamplitude überführt. Ein über die Schnittstelle möglicherweise eingeführtes und überlagertes Rauschen auf die Sensorsignale des Füllzustands-Sensors hat hierbei einen geringeren Einfluss auf das Messergebnis als ein möglicherweise auf die Energieversorgung überlagertes Rauschen.

Beispielsweise ist der Füllzustands-Sensor ein passives Messelement zum Messen eines elektrischen Widerstandes. Somit wird der Füllstand des Milchvolumens im Milchbehälter durch eine technisch zuverlässige und bewährte Messmethode detektiert. Die Füllzustands-Messelektronik erfasst hierbei den Messwert einer Widerstandsänderung und wertet diesen aus. Somit kann der Füllstand des Milchvolumens kontinuierlich überwacht werden. Eine Änderung des erfassten elektrischen Widerstandes kann durch die Füllzustands-Messelektronik als ein Absinken des Milchvolumens innerhalb des Milchbehälters unterhalb eines vorbestimmten Schwellwertes detektiert werden. Der Füllzustands-Sensor kann alternativ als ein kapazitiver Füllstands-Sensor ausgebildet sein. Es sind weitere passive, aktive oder optische Sensoren als Füllzustands-Sensoren einsetzbar, welche dazu geeignet sind, einen Füllstand eines Fluides innerhalb eines Behälters zu erfassen. Es sind ferner Sensoren als Füllzustands-Sensor einsetzbar, welche ein Absinken eines Füllstandes unterhalb eines vorbestimmten Schwellwertes (beispielsweise eine notwendige Milchabgabe) erfassen.

Beispielsweise enthält der Füllzustands-Sensor zumindest zwei elektrisch leitfähige Sensorelemente, welche voneinander elektrisch getrennt sind und separat elektrisch mit der Füllzustands-Messelektronik verbunden sind. Ein beispielhafter Füllzustands-Sensor zum Erfassen des Milchvolumens kann zwei elektrisch leitfähige Sensorelemente enthalten, welche über das Milchvolumen elektrisch miteinander verbunden sind. Hierbei dient das Milchvolumen als elektrischer Leiter einer bestimmten elektrischen Widerstandsgrösse, bzw. eines bestimmten elektrischen Leitwertes. Ein Absinken des Milchvolumens unterhalb eines bestimmten Schwellwertes (welchem ein Absinken des Milchniveaus einhergeht) hat zur Folge, dass zumindest eines der leitfähigen Sensorelemente keinen Kontakt mit dem Milchvolumen hat. Somit ist auch der elektrische Kontakt zwischen den beiden Sensorelementen über das Milchvolumen abgebrochen. In diesem Fall steigt die elektrische Widerstandsgrösse zwischen diesen beiden Sensorelementen auf Unendlich an. Dieser Anstieg der elektrischen Widerstandsgrösse wird wiederum durch die Füllzustands-Messelektronik detektiert.

Beispielsweise sind die Sensorelemente an Oberflächenbereichen der Milchlanze oder der Sensorlanze angebracht. Hierdurch stehen die Sensorelemente bei ausreichender Befüllung des Milchbehälters dauerhaft und zuverlässig mit dem Milchvolumen in Flächenkontakt. Der elektrische Widerstand zwischen diesen beiden Sensorelementen lässt sich somit unter anderem anhand der elektrischen Leitfähigkeit der Milch bestimmen. Die elektrische Leitfähigkeit ist ein Mass für den Widerstand eines Mediums gegenüber elektrischem Strom. Sie ist reziprok zum Widerstand (Impedanz) und wird in Siemens (1 S = 1 A/1 V) gemessen. Die spezifische Leitfähigkeit der Milch (mS/cm) ergibt sich aus dem Vorhandensein von Elektrolyten. Die Leitfähigkeit der Milch schwankt in Abhängigkeit unter anderem vom Fettgehalt der Milch und von der Milchtemperatur. Die elektrische Leitfähigkeit der Milch schwankt ungefähr zwischen 4,5 und 5,9 mS/cm bei einer Temperatur von 20°C.

Beispielsweise sind die Sensorelemente jeweils an derartigen Positionen an den Oberflächenbereichen der Milchlanze oder der Sensorlanze angebracht, dass - falls der Deckel derart angeordnet ist, dass er den Milchbehälter bedeckt oder verschliesst - zwischen zumindest zwei Sensorelementen ein elektrischer Kontakt über das im Milchbehälter eingefüllte Milchvolumen hergestellt ist, wenn das im Milchbehälter enthaltene Milchvolumen grösser als ein notwendiges Milchvolumen zur Zubereitung einer gewünschten Kaffeespezialität ist, und der elektrische Kontakt unterbrochen ist, wenn das im Milchbehälter enthaltene Milchvolumen geringer als das notwendige Milchvolumen ist. Bei einer beispielhaften Anordnung können mehr als zwei Sensorelemente an der Aussenfläche der Milchlanze oder Sensorlanze angeordnet werden, welche zueinander in Längsrichtung der jeweiligen Lanze ausgerichtet sind. Wenn der Deckel derart angeordnet ist, dass er den Milchbehälter bedeckt oder verschliesst, sind diese Sensorelemente somit übereinander angeordnet. Ferner können diese Sensorelemente über separate Zuleitungen mit jeweiligen Eingängen der Füllzustands-Messelektronik verbunden sein. Die Füllzustands-Messelektronik ist hierbei derart ausgebildet, dass sie jeweils den elektrischen Widerstand zwischen dem untersten Sensorelement (beispielsweise am distalen Ende der Milchlanze oder Sensorlanze angebracht) und den jeweiligen weiteren Sensorelementen misst.

Bei einem vollständig gefüllten Milchbehälter stehen somit alle Sensorelemente mit dem Milchvolumen in Kontakt, sodass zwischen dem untersten Sensorelement und den jeweiligen weiteren Sensorelementen ein elektrischer Widerstand messbar ist. Ein abnehmendes Milchvolumen und eine damit einhergehende Absenkung des Milchniveaus haben zur Folge, dass das Milchniveau unterhalb beispielsweise des obersten Sensorelements absinkt. Somit steigt der elektrische Widerstand zwischen dem untersten Sensorelement und diesem obersten Sensorelement auf nahezu Unendlich (R -> ∞) an. Diese Änderung im elektrischen Widerstand wird durch die Füllzustands-Messelektronik erfasst und als geänderte Füllzustandsinformation ausgewertet und ausgegeben. Ein weiter abnehmendes Milchvolumen und eine damit einhergehende Absenkung des Milchniveaus unterhalb des zweitobersten Sensorelements werden ebenfalls durch die Füllzustands-Messelektronik erfasst und als geänderte Füllzustandsinformation ausgewertet und ausgegeben. Dieser Ablauf setzt sich in diskreten Schritten fort. Hierdurch kann der Füllstand des Milchvolumens im Milchbehälter zuverlässig erfasst und ausgegeben werden. Mit steigender Anzahl der übereinander angeordneten Sensorelemente steigt auch die Genauigkeit der Aussage über den Füllstand des Milchvolumens im Milchbehälter an.

Beispielsweise enthält der Milchkühler ein Anzeigenelement, welches an einer Aussenfläche vom Milchkühler angebracht ist und elektrisch mit der Füllzustands-Messelektronik verbunden ist, zur optischen Anzeige einer Information über den Füllzustand des Milchbehälters. Hierdurch kann der Füllstand des Milchvolumens mithilfe des Anzeigenelements (welches beispielsweise auf der Oberseite des Deckels angebracht ist) angezeigt werden. Das Anzeigenelement kann ein leuchtendes Piktogramm oder eine LED sein. Die optische Anzeige kann eine Information sein, welche einen Hinweis über das enthaltene Milchvolumen angibt (beispielsweise 1000 Milliliter, 500 Milliliter, 250 Milliliter, usw.). In einer einfachen Ausführung kann die optische Anzeige lediglich einen Hinweis darüber angeben, dass das enthaltene Milchvolumen unterhalb eines vorbestimmten Schwellwert-Volumens (notwendiges Milchvolumen) abgesunken ist. In diesem Fall kann beispielsweise eine einzelne LED aufleuchten.

Beispielsweise enthält der Milchkühler ferner einen Temperatursensor, welcher dazu ausgelegt ist, ein Temperatursignal in Ansprechen auf eine erfasste Temperatur des Milchvolumens im Milchbehälter zu erzeugen. Hierdurch kann zusätzlich die Milchtemperatur überwacht werden. Falls die Milchtemperatur länger als eine vorbestimmte Zeitperiode einen vorbestimmten Temperatur-Schwellwert dauerhaft überstiegen hat, kann dem Benutzer diese Information mitgeteilt werden. Hierdurch kann der Bezug von eventuell verdorbener Milch vermieden werden.

Beispielsweise ist der Temperatursensor elektrisch mit dem Sender verbunden, welcher ferner dazu ausgelegt ist, das Temperatursignal über die Luftschnittstelle an die Getränkebereitungsmaschine zu übertragen. Hierbei kann dem Benutzer die Information über die Milchtemperatur mittels einer Anzeige an der Getränkebereitungsmaschine mitgeteilt werden. Alternativ oder zusätzlich kann diese Information an einer Anzeige angezeigt werden, welche an einer Aussenfläche des Milchkühlers, beispielsweise auf der Oberseite des Deckels, angebracht ist. Beispielsweise können Einrichtungen an der Getränkebereitungsmaschine bereitgestellt sein, welche einen Bezug eines Milchvolumens verhindern, wenn die Information darüber anliegt, dass das Milchvolumen länger als eine vorbestimmte maximale Zeitdauer einer Temperatur oberhalb einer vorbestimmten maximalen Temperatur ausgesetzt war. Somit kann der Getränkebezug von hygienisch nicht einwandfreier, verdorbener Milch im Vorfeld unterbunden werden.

Beispielsweise ist der Temperatursensor an einem Umfangsbereich der Milchlanze oder Sensorlanze angebracht. Somit kann der Temperatursensor auch schnelle und/oder hohe Temperaturschwankungen des Milchvolumens zuverlässig erfassen.

Eine Ausführungsform der Getränkebereitungsmaschine umfasst: eine Benutzerschnittstelle, über welche manuell unterschiedliche Kaffeespezialitäten auswählbar sind; eine Datenbank, welche eine Information über ein notwendiges Milchvolumen zur Zubereitung einer jeweils an der Benutzerschnittstelle auswählbaren Kaffeespezialität gespeichert hält; eine Entscheidungslogik mit Eingängen, welche jeweils mit dem Sender/Empfänger, der Benutzerschnittstelle und der Datenbank verbunden sind, wobei die Entscheidungslogik dazu ausgelegt ist, in Ansprechen auf eine Eingabe an der Benutzerschnittstelle eine Information über ein hierzu notwendiges Milchvolumen aus der Datenbank auszulesen, diese Information mit der empfangenen Information über den Füllzustand des Milchbehälters zu vergleichen, und eine Milchabgabe aus der Milchabgabevorrichtung nur unter der Bedingung auszugeben, dass das im Milchbehälter enthaltene Milchvolumen nicht kleiner als das zur Zubereitung der jeweils ausgewählten Kaffeespezialität notwendige Milchvolumen ist.

Ein wesentlicher Vorteil dieser Getränkebereitungsmaschine besteht darin, dass die Entscheidungslogik auf Basis von Eingaben von dem Sender/Empfänger (Information über den Füllstand des Milchvolumens im Milchbehälter), der Benutzerschnittstelle (Information über die jeweils manuell ausgewählte Kaffeespezialität) und der Datenbank (Information über ein notwendiges Milchvolumen zur Zubereitung der jeweils ausgewählten Kaffeespezialität) entscheidet, ob das im Milchbehälter enthaltene Milchvolumen zur Zubereitung der ausgewählten Kaffeespezialität ausreicht. Falls das Milchvolumen ausreicht, wird diese Kaffeespezialität zubereitet. Falls das Milchvolumen nicht ausreicht, wird die Kaffeespezialität nicht zubereitet. In diesem Fall kann lediglich ein schwarzer Kaffee oder Espresso ausgegeben werden. Somit werden immer einwandfreie Kaffeespezialitäten mit ausreichend Milch zubereitet.

Beispielsweise enthält die Getränkebereitungsmaschine ein elektrisch ansteuerbares Fluidventil, welches elektrisch mit dem Ausgang der Entscheidungslogik verbunden ist, wobei das Fluidventil dazu ausgelegt ist, bei der Ausgabe des Freigabe-Signals zur Freigabe der Milchabgabe einen Fluiddurchgang zum Durchleiten eines Dampfbezuges durch die Milchabgabevorrichtung zu öffnen. Hierdurch wird die Milchabgabe auf Basis einer von der Entscheidungslogik getroffenen Entscheidung mit einem besonders einfachen und kostengünstigen Aufbau ermöglicht. Ein Fluidventil zum Öffnen oder Schliessen einer Leitung zum Durchleiten eines Dampfbezuges durch die Milchabgabevorrichtung ist in vielen Getränkebereitungsmaschinen bereits enthalten. Herkömmlicherweise wird dieses Fluidventil durch manuelle Betätigung einer Taste oder eines Schalters elektrisch ein- oder ausgeschaltet. Es sind auch rein mechanisch bedienbare Fluidventile bekannt.

Beispielsweise enthält die Milchabgabevorrichtung eine Kammer zum Erzeugen eines Unterdrucks, in welcher bei Durchleitung des Dampfbezugs ein Unterdruck erzeugbar ist, wobei die Kammer mit dem Milcheinlass in Fluidverbindung steht. Diese Anordnung ermöglicht das Ansaugen einer bestimmten Menge von Milch aus dem Milchbehälter über den Milchschlauch in die Kammer. Diese Ansaugung geschieht auf Basis des Venturi-Prinzips in der Kammer (Unterdruckkammer), in welcher bei Durchleitung des Dampfbezugs ein Unterdruck erzeugbar ist.

Beispielsweise ist der Sender/Empfänger ferner dazu ausgelegt, ein Temperatursignal zu empfangen, welches eine Information über eine Temperatur des Milchvolumens im Milchbehälter des Milchkühlers enthält. Das zwischen dem Sender des Milchkühlers und dem Sender/Empfänger der Getränkebereitungsmaschine über die Luftschnittstelle übertragene Funksignal kann auf einer ISM-Band-(Industrial, Scientific and Medical Band)-Trägerfrequenz von 2,4 GHz oder einer anderen Träger-Hochfrequenz übertragen werden. Auf der ISM-Band-Trägerfrequenz kann weltweit zulassungsfrei und lizenzfrei übertragen werden. Der Sender/Empfänger kann in einer Steuerung der Getränkebereitungsmaschine integriert sein. Besonders vorteilhaft kann der Sender/Empfänger an einer geeigneten Schnittstelle der Getränkebereitungsmaschine entnehmbar eingesteckt sein. Die Kommunikation zwischen dem Sender/Empfänger und der Steuerung geschieht hierbei leitungsgebunden. Beispielsweise kann die zuvor beschriebene Entscheidungslogik in der Steuerung enthalten sein. Vor einem Milchbezug kann die Steuerung über die Funkstrecke zwischen dem Sender und dem Sender/Empfänger den jeweiligen Füllstand des Milchvolumens abfragen. Wenn das im Milchbehälter bevorratete Milchvolumen geringer als ein vorbestimmtes minimales Milchvolumen ist, wird die Zubereitung der Kaffeespezialität nicht gestartet. Der Sender/Empfänger ist zum Senden und/oder Empfangen eines Informationssignals ausgelegt. Der Sender/Empfänger kann somit lediglich eine Empfangseinrichtung enthalten.

Beispielsweise enthält die Getränkebereitungsmaschine ferner eine Anzeigevorrichtung, welche an einer Aussenfläche davon angebracht ist und elektrisch mit dem Sender/Empfänger verbunden ist, zur optischen Anzeige einer Information über den Füllzustand des Milchbehälters und/oder über die Temperatur des Milchvolumens im Milchbehälter. Somit kann dem Benutzer vorteilhafterweise direkt schon an der Getränkebereitungsmaschine eine Information hinsichtlich des Füllzustandes des Milchbehälters und möglicherweise zusätzlich hinsichtlich der Temperatur des Milchvolumens angezeigt bzw. mitgeteilt werden.

Vorzugsweise enthält die Kombination ferner zumindest ein Beistellgerät mit einer Funkeinrichtung zum Übertragen eines Beistellgerät-Informationssignals an die Getränkebereitungsmaschine und/oder Empfangen eines Getränkebereitungsmaschine-Informationssignals von der Getränkebereitungsmaschine über jeweils eine Luftschnittstelle. Die Funkeinrichtung kann beispielsweise als eine Sender/Empfänger-Einrichtung ausgeführt sein und kann jeweils in weiteren Beistellgeräten im Zusammenwirken mit der Getränkebereitungsmaschine eingesetzt werden. Die Steuerung der Getränkebereitungsmaschine kann somit leitungsungebunden über den Zustand dieser Beistellgeräte informiert werden. Beispielsweise kann ein Abrechnungssystem implementiert werden (Münz- oder Jetons-Zähler, Schlüssel U-Key, Karten mit virtuellem Guthaben, Kreditkarten), indem der Getränkebereitungsmaschine der bezahlte Betrag gemeldet wird und diese daraufhin den Bezug einer Kaffeespezialität freischaltet oder sperrt. Die Funkeinrichtung kann ferner im Servicefall oder bei der Geräteproduktion eingesetzt werden, um einen elektronischen Speicher der Getränkebereitungsmaschine ein- oder auszulesen.

Das erfindungsgemässe Verfahren zum Abgeben von Milch und/oder Milchschaum mittels einer Kombination aus einer Getränkebereitungsmaschine zur Bereitung eines Getränks und einem Milchkühler zur gekühlten Bevorratung eines Milchvolumen umfasst die Schritte:
- Erfassen eines Füllzustandes eines Milchbehälters des Milchkühlers,
- Senden einer Information über den Füllzustand des Milchbehälters an die Getränkebereitungsmaschine mittels eines Funksignals über eine Luftschnittstelle,

- Anlegen dieser Information an eine Entscheidungslogik der Getränkebereitungsmaschine,
- Auswählen einer Kaffeespezialität über eine Benutzerschnittstelle der Getränkebereitungsmaschine und Übertragen einer Information über die ausgewählte Kaffeespezialität an die Entscheidungslogik,
- Auslesen einer Information aus einer Datenbank über ein jeweils notwendiges Milchvolumen zur Zubereitung einer jeweils ausgewählten Kaffeespezialität,
- Vergleichen der Information über das notwendige Milchvolumen mit der Information über den Füllzustand des Milchbehälters, wobei die Entscheidungslogik ein Freigabe-Signal zur Freigabe einer Abgabe einer Portion Milch und/oder Milchschaum erzeugt, wenn der Füllstand der Milch im Milchbehälters nicht geringer als das notwendige Milchvolumen ist, und/oder wobei die Entscheidungslogik ein Nicht-Freigabe-Signal zur Nicht-Freigabe einer Abgabe einer Portion Milch und/oder Milchschaum erzeugt, wenn der Füllstand der Milch im Milchbehälter geringer als das notwendige Milchvolumen ist, und
- Anlegen des Freigabe-Signals oder des Nicht-Freigabe-Signals an ein elektrisches Fluidventil einer Milchabgabevorrichtung der Getränkebereitungsmaschine.

Hierdurch wird gewährleistet, dass an der Getränkebereitungsmaschine stets Kaffeespezialitäten mit einem jeweils hierzu notwendigen Milchvolumen zubereitet und ausgegeben werden. Sollte erfasst werden, dass der Füllzustand des Milchbehälters im Milchkühler zu niedrig ist, um hieraus eine jeweils gewünschte Kaffeespezialität zubereiten zu können, wird ein Bezug einer Portion Milch aus dem Milchbehälter gar nicht erst gestartet. In diesem Fall kann beispielsweise weiterhin ein Kaffeeprodukt - jedoch ohne Milch zubereitet - bezogen werden.

Vorzugsweise enthält das Verfahren ferner den Schritt: Senden einer Information über die Temperatur des Milchvolumens im Milchbehälter an die Getränkebereitungsmaschine über die Luftschnittstelle. Eine Funkeinrichtung, welche zumindest einen Sender und/oder Empfänger umfasst, kann beispielsweise auch in weiteren Beistellgeräten im Zusammenwirken mit der Getränkebereitungsmaschine eingesetzt werden. Die Steuerung der Getränkebereitungsmaschine kann somit leitungsungebunden über den Zustand dieser Beistellgeräte informiert werden. Vorzugsweise enthält das Verfahren ferner den Schritt: Anzeigen einer Information über den Füllzustand des Milchbehälters und/oder über die Temperatur des Milchvolumens im Milchbehälter am Milchkühler und/oder an der Getränkebereitungsmaschine. Somit kann der Benutzer schnell und einfach über den Füllstand und/oder die Temperatur des Milchvolumens informiert werden.

Weitere Einzelheiten der Erfindung werden im Folgenden anhand der beigefügten Zeichnungen erläutert. Es zeigen:
- Figuren 1a-c: jeweils eine schematische Schnittansicht eines Milchkühlers in drei unterschiedlichen Ausführungsformen;
- Figuren 2a, b: jeweils eine Ansicht auf die Oberseite und Unterseite eines Deckels des Milchkühlers gemäss einem ersten Beispiel;
- Figuren 3a, b: jeweils eine Ansicht auf die Oberseite und Unterseite eines Deckels des Milchkühlers gemäss einem zweiten Beispiel;
- Figur 4: eine schematische Schnittansicht einer Kombination einer Getränkebereitungsmaschine mit einem Milchkühler gemäss Fig. 1a;
- Figuren 5a-c: unterschiedliche Beispiele eines an die Getränkebereitungsmaschine einsteckbaren Sender/Empfängers;
- Figur 6: eine schematische Darstellung einer Kombination aus dem Milchkühler und der Getränkebereitungsmaschine; und
- Figur 7: ein Ablaufdiagramm eines Verfahrens gemäss einer Ausführungsform der vorliegenden Erfindung.

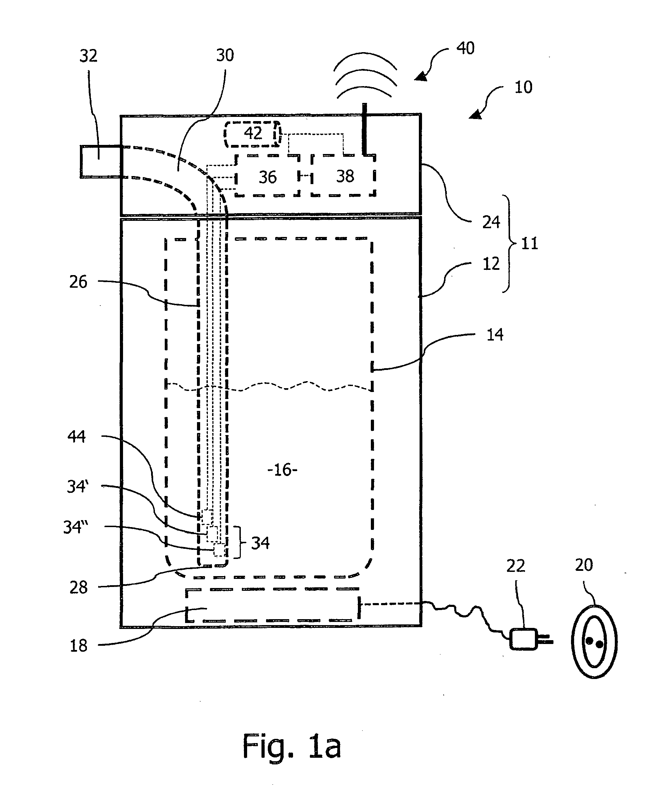

Figuren 1a bis c zeigen jeweils eine schematische Schnittansicht eines Milchkühlers in drei unterschiedlichen Ausführungsformen.

Figur 1a zeigt hierbei eine Schnittansicht eines erfindungsgemässen Milchkühlers 10 in einer ersten Ausführungsform. Der Milchkühler 10 ist zur gekühlten Bevorratung von Milch geeignet und kann über einen Milchschlauch (nicht gezeigt) mit einer Getränkebereitungsmaschine (nicht gezeigt) verbunden werden. Die Getränkebereitungsmaschine kann somit bei Bedarf gekühlte Milch aus dem Milchkühler 10 ansaugen. Der Milchkühler 10 ist nach aussen begrenzt durch ein Gehäuse 11. Ein Bestandteil des Gehäuses 11 ist u.a. ein Milchbehälterkörper 12, welcher einen Milchbehälter 14 zur Aufnahme eines Milchvolumens 16 umfasst. Der Milchbehälter 14 kann entnehmbar in den Milchbehälterkörper 12 einsetzbar sein. Alternativ können der Milchbehälter 14 und der Milchbehälterkörper 12 einstückig ausgebildet sein. Der Milchkühler 10 enthält ferner eine Kühleinheit 18 zum Kühlen des Milchvolumens 16. Die Kühleinheit 18 kann beispielsweise ein Peltier-Element enthalten. Die Kühleinheit 18 wird über eine externe elektrische Energiequelle 20 (beispielsweise eine Steckdose mit einer 230 V/50 Hz Netzspannung) mit elektrischer Energie versorgt. Diese Netzspannung wird über ein Steckernetzteil 22 auf eine Gleichstrom-Niederspannung (z.B. 12 V oder 24 V) umgewandelt, welche der Kühleinheit 18 angelegt wird. Obwohl in der Figur nicht angezeigt, kann die 230 V/50 Hz Netzspannung der externen elektrischen Energiequelle 20 direkt einem Schaltnetzteil (nicht gezeigt) zugeführt werden, welches im Milchbehälterkörper 12 enthalten ist. Dieses Schaltnetzteil wandelt die Netzspannung in die Gleichstrom-Niederspannung zum Betreiben der Kühleinheit 18 um.

Das Gehäuse 11 des Milchkühlers 10 enthält ferner einen Deckel 24 zum Verschliessen des Milchbehälters 14. Der Deckel 24 kann ferner den Milchbehälterkörper 12 verschliessen. Der Verschlussmechanismus zum Verschliessen des Milchbehälters 14 bzw. des Milchbehälterkörpers 12 kann ein Schraubverschluss, ein Schnappverschluss oder ein jeglicher weiterer Verschluss zum dichten Verschliessen und Öffnen des Deckels 24 mit dem Milchbehälter 14 sein. An der Unterseite des Deckels 24 ist eine Milchlanze 26 angeordnet, welche sich von der Unterseite des verschlossenen Deckels 24 aus im Wesentlichen senkrecht nach unten in das Milchvolumen 16 erstreckt. Die Milchlanze 26 ist dabei derart angeordnet und ausgebildet, dass sie sich im Wesentlichen vollständig innerhalb des Raumes des Milchbehälters 14 erstreckt, wenn der Deckel 24 derart angeordnet ist, dass er den Milchbehälter 14 bzw. den Milchbehälterkörper 12 bedeckt oder verschliesst. Das distale Ende der Milchlanze 26 ist unter diesen Umständen nur gering vom Boden des Milchbehälters 14 beabstandet. Dieser Abstand kann beispielsweise 1 bis 5 mm betragen. Somit kann nahezu der gesamte Inhalt des Milchbehälters 14 entleert werden. An diesem distalen Ende der Milchlanze 26 ist eine Milchlanzenöffnung 28 angeordnet, welche in einen Kanal (nicht gezeigt) mündet, welcher im Inneren entlang der Milchlanze 26 verläuft. Dieser Kanal steht mit einer Durchleitung 30 im Inneren des Deckels 24 in Verbindung, welche in einem Milchauslass 32 an der Aussenseite des Deckels 24 mündet. Somit stehen die Milchlanzenöffnung 28 und der Milchauslass 32 in Fluidverbindung.

Die Milchlanze 26 umfasst ferner einen Füllzustands-Sensor 34, welcher an einem Umfangsbereich der Milchlanze 26 angebracht ist. Dieser Füllzustands-Sensor 34 kann ein Sensorsignal in Ansprechen auf einen Füllzustand des Milchbehälters 14 erzeugen. Der Füllzustands-Sensor 34 kann ein passives Messelement zum Messen eines elektrischen Widerstandes sein. Hierbei kann er zumindest zwei elektrisch leitfähige Sensorelemente 34', 34" enthalten, welche voneinander elektrisch getrennt an Oberflächenbereichen der Milchlanze 26 angebracht sind und jeweils separat mit einer elektrischen Leitung verbunden sind. Der Füllzustands-Sensor 34 ist mit einer im Deckel 24 angeordneten Füllzustands-Messelektronik 36 verbunden, die dazu ausgelegt ist, aus dem Sensorsignal des Füllzustands-Sensors 34 ein Füllzustandsinformationssignal zu erzeugen, welches eine Information über den Füllzustand des Milchbehälters 14 enthält. Diese Füllzustands-Messelektronik 36 ist elektrisch mit einem Sender 38 verbunden, der dieses Füllzustandsinformationssignal über eine Luftschnittstelle 40 mittels eines Funksignals an eine Getränkebereitungsmaschine übertragen kann.

Der Füllzustands-Sensor 34 und die Füllzustands-Messelektronik 36 sind Bestandteile einer Überwachungseinrichtung zum Überwachen eines Füllzustands des Milchbehälters 14 bzw. zum Überwachen eines Füllstands der Milch im Milchbehälter 14.

In diesem beschriebenen Beispiel der ersten Ausführungsform sind somit sowohl die Füllzustands-Messelektronik 36 als auch der Sender 38 in dem Deckel 24 enthalten. Diese elektronischen Bauelemente werden durch einen Energiespeicher 42 mit elektrischer Energie versorgt. Dieser Energiespeicher 42 kann eine oder mehrere Batterien oder einen oder mehrere wiederaufladbare Akkus enthalten. Dieser Energiespeicher 42 ist innerhalb des Deckels 24 in einer verschliessbaren Ausnehmung, welche von aussen zugänglich ist, entnehmbar untergebracht und elektrisch sowohl mit der Füllzustands-Messelektronik 36 als auch dem Sender 38 verbunden. Ein Vorteil dieser Anordnung besteht darin, dass der Milchkühler 10 ohne jegliche Schnittstellen auskommt, da sämtliche elektronische Bauelemente (Füllzustands-Messelektronik 36 und Sender 38), einschliesslich ihrer Energieversorgung (Energiespeicher 42), im Deckel 24 untergebracht sind.

Der Milchkühler 10 enthält ferner einen Temperatursensor 44, welcher ebenfalls an einem Umfangsbereich der Milchlanze 26 angebracht ist. Hierdurch steht der Temperatursensor 44 (im verschlossenen Zustand des Deckels 24 auf dem Milchbehälter 14) mit dem Milchvolumen 16 in direkten Kontakt und kann somit auch rasche Temperaturschwankungen des Milchvolumens 16 zuverlässig erfassen. Der Temperatursensor 44 erzeugt ein Temperatursignal in Ansprechen auf die erfasste Temperatur des Milchvolumens 16. Der Temperatursensor 44 ist elektrisch mit der Füllzustands-Messelektronik 36 und/oder dem Sender 38 verbunden. Der Sender 38 überträgt das Temperatursignal über die Luftschnittstelle 40 an die Getränkebereitungsmaschine. Somit kann die Temperatur des Milchvolumens 16 an beispielsweise einer Anzeigevorrichtung der Getränkebereitungsmaschine angezeigt werden. Alternativ oder zusätzlich kann die Temperatur des Milchvolumens 16 an einer Anzeigevorrichtung direkt am Milchkühler 10 angezeigt werden.

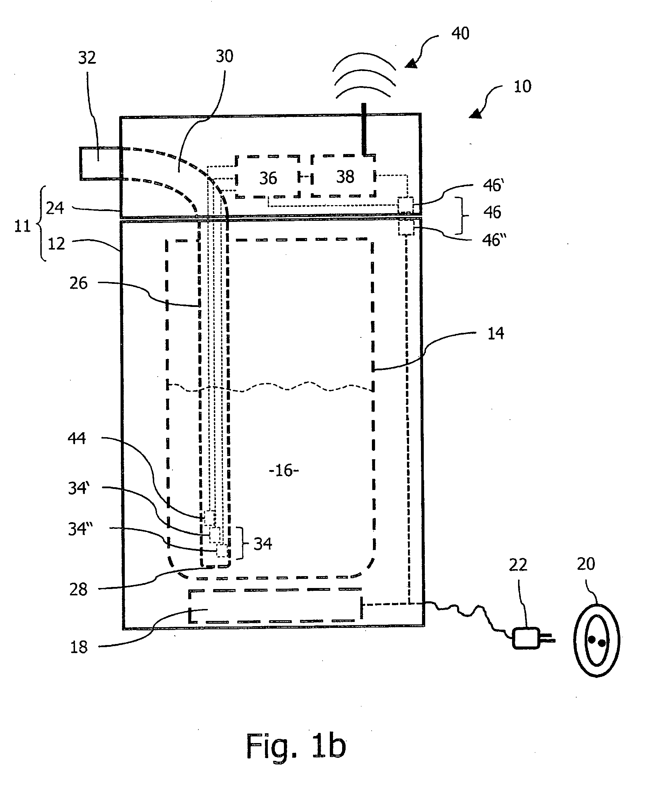

Figur 1b zeigt ein Beispiel des Milchkühlers 10 in einer zweiten Ausführungsform. Hierbei werden die Füllzustands-Messelektronik 36 und der Sender 38 über die an den Milchbehälterkörper 12 gekoppelte externe elektrische Energiequelle 20 mit elektrischer Energie versorgt. Die elektrische Verbindung hierzu wird über eine Energieversorgungs-Schnittstelle 46 zwischen dem Milchbehälterkörper 12 und dem Deckel 24 hergestellt. Diese Energieversorgungs-Schnittstelle 46 enthält beispielsweise zwei Schnittstellenelemente 46', 46", welche jeweils am Milchbehälterkörper 12 und Deckel 24 derart ausgerichtet und angeordnet sind, dass sie miteinander elektrisch verbunden sind, wenn der Deckel 24 derart angeordnet ist, dass er den Milchbehälter 14 bzw. den Milchbehälterkörper 12 bedeckt oder verschliesst. Somit kann der Deckel 24 weiterhin problemlos vom Milchbehälter 14 entnommen werden, um beispielsweise Milch aufzufüllen oder um den Deckel 24 und/oder den Milchbehälter 14 zu reinigen. Der Füllzustands-Sensor 34 verbleibt in diesem Beispiel weiterhin dauerhaft elektrisch mit der Füllzustands-Messelektronik 36 verbunden.

Ein Vorteil dieser Anordnung besteht darin, dass nunmehr kein Energiespeicher (vgl. Fig. 1a) notwendig ist. Hierdurch wird das Gewicht des Deckels 24 reduziert. Zudem müssen keine Batterien mehr ausgetauscht werden oder Akkus nachgeladen werden. Da die externe elektrische Energiequelle 20 ohnehin an den Milchbehälterkörper 12 gekoppelt ist, um beispielsweise die Kühleinheit 18 mit elektrischer Energie zu versorgen, müssen auch keine zusätzlichen Aufwendungen vorgenommen werden.

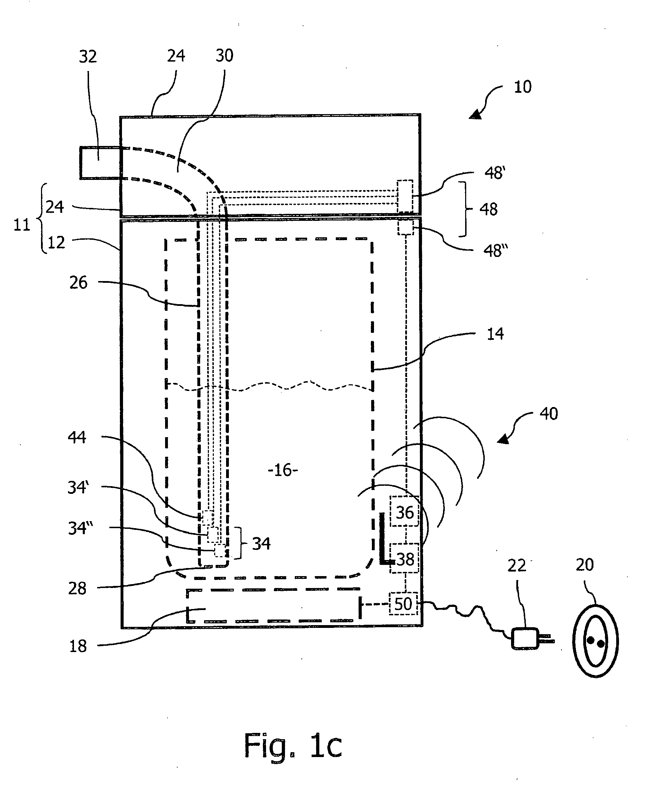

Figur 1c zeigt ein Beispiel des Milchkühlers 10 in einer dritten Ausführungsform. Hierbei sind die Füllzustands-Messelektronik 36 und der Sender 38 direkt im Milchbehälterkörper 12 untergebracht. Die Versorgung dieser elektronischen Bauelemente mit elektrischer Energie geschieht hierbei analog dem Beispiel aus der zweiten Ausführungsform, d.h. über die am Milchbehälterkörper 12 angekoppelte externe elektrische Energiequelle 20. Der Unterschied hierbei ist, dass die in dem Beispiel aus der zweiten Ausführungsform erwähnte Energieversorgungs-Schnittstelle zwischen dem Milchbehälterkörper 12 und dem Deckel 24 entfällt. Hierfür ist eine Sensor-Schnittstelle 48 zwischen dem Milchbehälterkörper 12 und dem Deckel 24 notwendig, über welche der Füllzustands-Sensor 34 elektrisch mit der Füllzustands-Messelektronik 36 koppelbar ist. Diese Sensor-Schnittstelle 48 enthält zwei Schnittstellenelemente 48', 48'', welche jeweils am Milchbehälterkörper 12 und Deckel 24 derart ausgerichtet und angeordnet sind, dass sie im verschlossenen Zustand des Deckels 24 auf dem Milchbehälterkörper 12 miteinander elektrisch verbunden sind. Die elektronischen Bauelemente können über eine Energieversorgungs-Verteilerleiste 50 mit elektrischer Energie versorgt werden.

Ein weiterer Vorteil der dritten Ausführungsform gegenüber der ersten und der zweiten Ausführungsform besteht darin, dass die elektronischen Bauelemente sehr viel einfacher innerhalb des Milchbehälterkörpers 12 als im Deckel 24 angeordnet und elektrisch verbunden werden können. Auch müssen am Deckel 24 nunmehr keinerlei Vorkehrungen getroffen werden, um elektronische Bauelemente gegen einen Eintritt von Feuchtigkeit (beispielsweise Wasser beim Reinigen oder verschüttete Milch) abzudichten. Somit kann der Deckel 24 sehr viel einfacher, kompakter und günstiger in der Herstellung aufgebaut werden.

Der Aufbau des Sensors 34 ist bei allen Beispielen gemäss der ersten bis dritten Ausführungsform identisch. Die zuvor genannten Sensorelemente 34', 34" des Füllzustands-Sensors 34 sind jeweils an derartigen Positionen an Oberflächenbereichen der Milchlanze 26 angebracht, dass sie mit dem Milchvolumen 16 in Kontakt stehen (eingetaucht sind), solange das bevorratete Milchvolumen 16 grösser als ein notwendiges Milchvolumen zur Zubereitung einer gewünschten Kaffeespezialität ist. Ist das im Milchbehälter 14 bevorratete Milchvolumen 16 geringer als das notwendige Milchvolumen zur Zubereitung der gewünschten Kaffeespezialität, so steht zumindest eines der Sensorelemente 34', 34" nicht mehr mit dem Milchvolumen 16 in Kontakt. Hierdurch wird auch der elektrische Kontakt zwischen den Sensorelementen 34', 34" unterbrochen.

Es können selbstverständlich auch mehr als zwei Sensorelemente in Längsrichtung der Milchlanze 26 angeordnet werden, sodass diskrete Füllstandsniveaus erfasst werden können. Somit kann beispielsweise ein Überschreiten/Unterschreiten eines jeweiligen Füllstandsniveaus zur Zubereitung eines Latte Macchiatos, Cappuccinos, Milchkaffees oder einer weiteren Kaffeespezialität erfasst werden. Die jeweilige Zubereitung wird bei Unterschreiten eines jeweiligen Füllstandsniveaus nicht gestartet. Somit wird vermieden, dass eine mit unzureichender Menge von Milch zubereitete Kaffeespezialität bezogen wird.

Obwohl der Füllzustands-Sensor 34, bzw. die Sensorelemente 34', 34" in den Figuren 1a bis c an der Milchlanze 26 angebracht dargestellt sind, können diese auch an einer separaten Lanze angebracht sein.

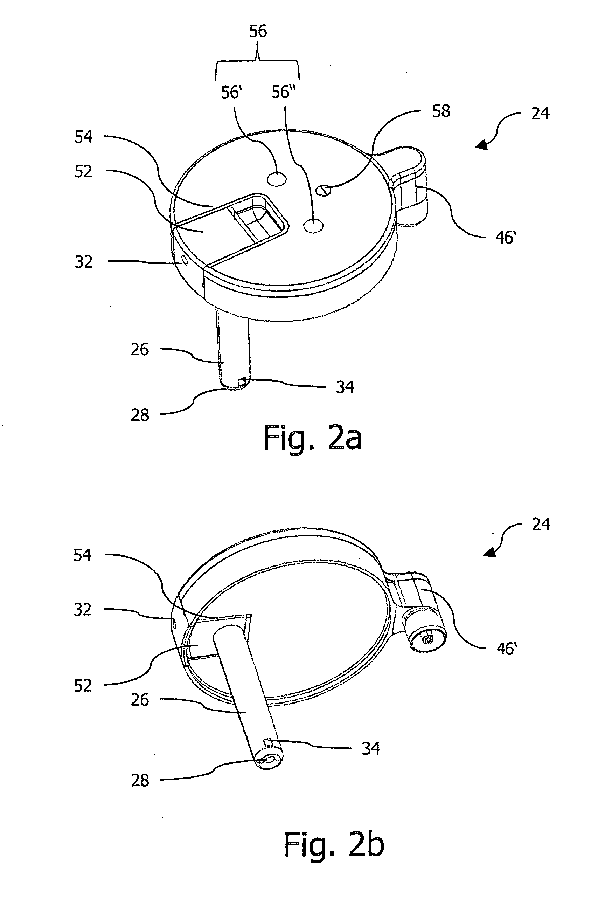

Figuren 2a und b zeigen jeweils ein erstes Beispiel des Deckels 24 in einer Draufsicht (Figur 2a) und einer Unteransicht (Figur 2b) in Perspektivdarstellung. Der Aufbau des Deckels 24 basiert auf dem Deckel des in Figur 1b dargestellten Milchkühlers 10 in der zweiten Ausführungsform. Der Deckel 24 enthält die Milchlanze 26, welche an einem Kopplungsstück 52 angebracht ist, welches passgenau in eine Ausnehmung 54 am Deckel 24 entnehmbar einsteckbar ist. Wenn das Kopplungsstück 52 in die Ausnehmung 54 eingesteckt ist, ist der Umfang des Deckels 24 unterbrechungsfrei fortgesetzt. An der Umfangsseite des Kopplungsstücks 52 ist der Milchauslass 32 angeordnet, welcher mit der innerhalb des Kopplungsstücks 52 eingebrachten Durchleitung (Fig. 1a-c) in Fluidverbindung steht. Diese Durchleitung steht wiederum mit dem Kanal (nicht gezeigt) in Fluidverbindung, welcher innerhalb der Milchlanze 26 und in Längsrichtung hierzu verläuft und in die Milchlanzenöffnung 28 mündet. Somit stehen die Milchlanzenöffnung 28 und der Milchauslass 32 miteinander in Fluidverbindung. Da lediglich Bauteile des Deckels 24, welche mit Milch in Kontakt treten, regelmässig gereinigt und gespült werden müssen, reicht es aus, wenn das Kopplungsstück 52 über die Ausnehmung 54 vom Deckel 24 getrennt wird. Dieses Kopplungsstück 52 mitsamt der Milchlanze 26 kann dann einer gründlichen Reinigung mit Wasser oder einer weiteren Reinigungslösung unterzogen werden. Bei einem Spülen können auch insbesondere der Kanal und die Durchleitung zuverlässig gereinigt bzw. durchspült werden. Am distalen Ende der Milchlanze 26 ist der Füllzustands-Sensor 34 angebracht, welcher den Füllzustand des Milchbehälters (nicht gezeigt) erfasst.

Der Deckel 24 enthält in diesem Beispiel ferner die Füllzustands-Messelektronik und den Sender (beide nicht gezeigt), welche im Inneren des Deckels 24 untergebracht sind. Diese elektronischen Bauelemente können in einer Ausnehmung im Deckel 24 untergebracht sein oder gänzlich mit dem Material des Deckels 24 vergossen sein. An der Aussenoberfläche des Deckels 24 ist ein Anzeigenelement 56 angeordnet, welches eine optische Anzeige über den Füllzustand des Milchbehälters angibt. Das Anzeigenelement 56 enthält zwei LEDs 56', 56'', welche durch ein jeweiliges Aufleuchten oder Erlöschen eine Information über den Füllzustand des Milchbehälters angeben.

An der für den Benutzer gut zugänglichen Aussenoberfläche des Deckels 24 ist eine Sender-Taste 58 bereitgestellt, welche elektrisch mit dem Sender verbunden ist. Bei einer Erstinbetriebnahme oder nach einem Austausch des Sender/Empfängers (der Getränkebereitungsmaschine) gegen einen anderen Sender/Empfänger und/oder nach einem Austausch des Senders (des Milchkühlers 10) muss diese Taste 58 betätigt werden. Zeitgleich muss eine Taste (nicht gezeigt) an der Getränkebereitungsmaschine betätigt werden, sodass sich der Sender und der Sender/Empfänger durch Austausch eines Signalisierungsprotokolls gegenseitig erkennen und über die Luftschnittstelle koppeln.

An einem weiteren Umfangsabschnitt des Deckels 26 ist ein Schnittstellenelement 46' einer Energieversorgungs-Schnittstelle angebracht. Dieses Schnittstellenelement 46' ist zu einem weiteren Schnittstellenelement (nicht gezeigt) komplementär, welches am Milchbehälterkörper (nicht gezeigt) angeordnet ist. Beide Schnittstellenelemente sind derart ausgerichtet und angeordnet, dass sie miteinander elektrisch verbunden sind, wenn der Deckel 24 derart angeordnet ist, dass er den Milchbehälter 14 bzw. den Milchbehälterkörper 12 bedeckt oder verschliesst. Das Schnittstellenelement 46' enthält in diesem Beispiel koaxial ausgerichtete Verbindungselemente (Koaxialstecker), welche zu komplementär ausgerichteten Verbindungselementen (Koaxialbuchse) am Milchbehälterkörper passen und über diese eine elektrische Verbindung herstellen, sobald der Deckel 24 aufgesetzt ist. Die somit aufgebaute elektrische Verbindung koppelt die externe elektrische Energiequelle (nicht gezeigt) mit der Füllzustands-Messelektronik und dem Sender, sodass diese mit elektrischer Energie versorgt sind.

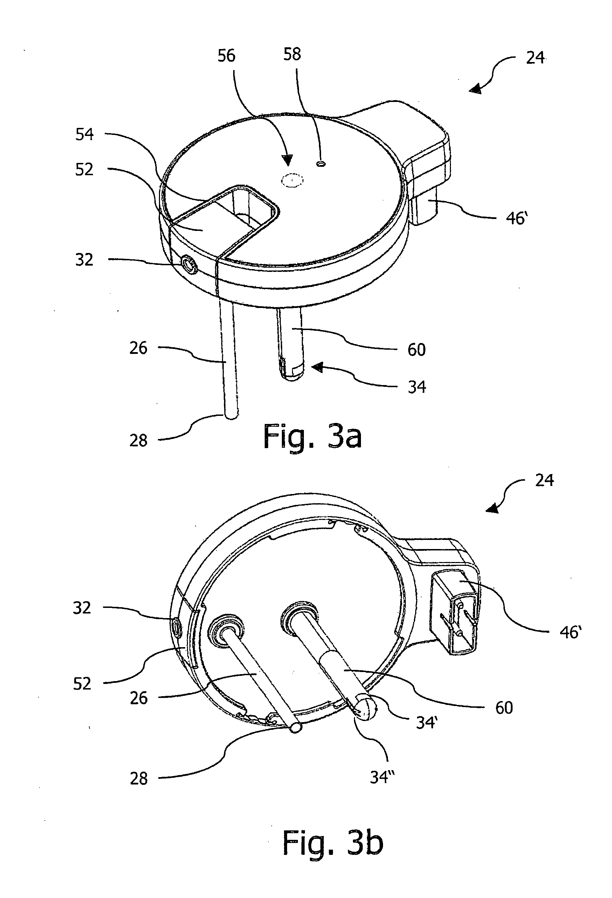

Figuren 3a und b zeigen jeweils ein zweites Beispiel des Deckels 24 in einer Draufsicht (Figur 3a) und einer Unteransicht (Figur 3b) in Perspektivdarstellung. Der dargestellte Deckel 24 unterscheidet sich von dem in Figuren 2a und b dargestellten Deckel in dem Punkt, dass zusätzlich eine Sensorlanze 60 enthalten ist. Diese Sensorlanze 60 ist derart an der Unterseite des Deckels 24 angebracht, dass auch sie im Wesentlichen vollständig in den Milchbehälter 14 hineinragt, wenn der Deckel 24 derart angeordnet ist, dass er den Milchbehälter 14 bzw. den Milchbehälterkörper 12 bedeckt oder verschliesst. Die Milchlanze 26 und Sensorlanze 60 können zueinander parallel verlaufen. Der Füllzustands-Sensor 34 ist nunmehr nicht an der Milchlanze 26 sondern an der Sensorlanze 60 angebracht. Somit ist er dauerhaft elektrisch mit der im Deckel 24 enthaltenen Füllzustands-Messelektronik (nicht gezeigt) verbunden. Der Füllzustands-Sensor 34 enthält in diesem Beispiel zwei Sensorelemente 34', 34'', welche am distalen Ende von der Sensorlanze 60 angebracht sind. Die Milchlanze 26 kann nunmehr weiterhin über das Kopplungsstück 52 vom Hauptkörper des Deckels 24 getrennt werden, um beispielsweise einer gründlichen Reinigung unterzogen zu werden, wobei keinerlei elektrische Schnittstelle zwischen dem Kopplungsstück 52 und dem Hauptkörper des Deckels 24 vorhanden sein muss. Hierdurch sind mögliche Fehlerquellen, beispielsweise hervorgerufen durch eine Verunreinigung durch Milchrückstände, ausgeschlossen. Das Schnittstellenelement 46' enthält in diesem Beispiel axial ausgerichtete Verbindungselemente (Axialstecker), welche zu komplementär ausgerichteten Verbindungselementen (Axialbuchse) am Milchbehälterkörper passen und über diese eine elektrische Verbindung herstellen, sobald der Deckel 24 aufgesetzt ist. Die somit aufgebaute elektrische Verbindung koppelt die externe elektrische Energiequelle (nicht gezeigt) mit der Füllzustands-Messelektronik und dem Sender, sodass diese mit elektrischer Energie versorgt sind.

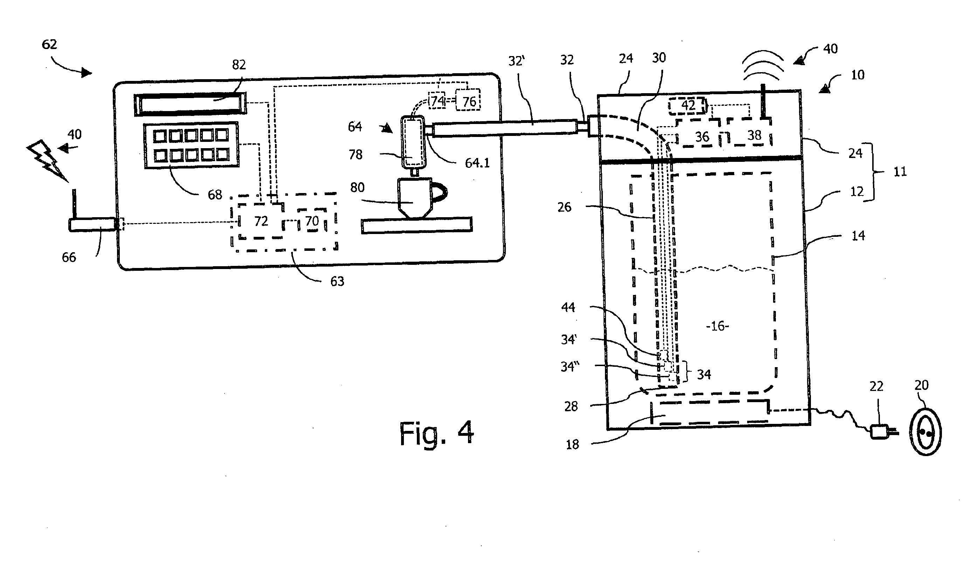

Figur 4 zeigt eine schematische Ansicht einer Getränkebereitungsmaschine 62, welche in Kombination mit einem der in Fig. 1-3 dargestellten Ausführungsformen eines Milchkühlers betrieben werden kann. In Fig. 4 ist als ein Beispiel eine Kombination aus der Getränkebereitungsmaschine 62 und dem Milchkühler 10 gemäss Fig. 1a dargestellt. Getränkebereitungsmaschine 62 umfasst u.a. eine Steuerungselektronik 63, welche alle Funktionen der Getränkebereitungsmaschine 62 überwacht und steuert. Die Getränkebereitungsmaschine 62 enthält weiterhin eine Milchabgabevorrichtung 64 mit einem Milcheinlass 64.1, welcher mit einem Ende eines Milchschlauchs 32' oder einer anderen Form einer Milchleitung koppelbar ist. Dieser Milchschlauch 32' steht an seinem weiteren Ende mit dem Milchauslass 32 des Milchkühlers 10 in Fluidverbindung. Die Getränkebereitungsmaschine 62 enthält ferner einen Sender/Empfänger 66, welcher das vom Senders 38 des Milchkühlers 10 übertragene FüllzustandsInformationssignal empfängt, welches eine Information über den Füllzustand des Milchbehälters 14 des Milchkühlers 10 enthält.

Der Sender/Empfänger 66 kann optional ebenfalls ein Beistellgerät-Informationssignal von einem oder mehreren Beistellgeräten (nicht gezeigt) im Zusammenwirken mit der Getränkebereitungsmaschine 62 empfangen. Dieses Beistellgerät-Informationssignal wird hierbei über eine im Beistellgerät umfasste Funkeinrichtung übertragen. Somit kann die Getränkebereitungsmaschine 62 leitungsungebunden über den Zustand dieser Beistellgeräte informiert werden. Die Funkeinrichtung kann ferner im Servicefall oder bei der Geräteproduktion eingesetzt werden, um einen elektronischen Speicher der Getränkebereitungsmaschine 62 ein- oder auszulesen. In diesem Fall sind der Sender/Empfänger 66 der Getränkebereitungsmaschine 62 als auch die Funkeinrichtung des Beistellgeräts zur bi-direktionalen Kommunikation ausgelegt.

Der Sender/Empfänger 66 ist in eine entsprechende Schnittstelle an der Aussenseite der Getränkebereitungsmaschine 62 einsteckbar. Somit kann die Getränkebereitungsmaschine 62 schnell und einfach optional mit diesem Sender/Empfänger 66 erweitert werden. Alternativ kann der Sender/Empfänger 66 auf einer Schaltplatine, auf welcher die Steuerungselektronik 63 implementiert ist, im Inneren der Getränkebereitungsmaschine 62 integriert sein. Der Empfang des Füllzustandsinformationssignals erfolgt über die Luftschnittstelle 40. Der Signalaustausch zwischen dem Sender des Milchkühlers und dem Sender/Empfänger 66 der Getränkebereitungsmaschine 62 kann über ein Trägersignal auf einer ISM-Band-Trägerfrequenz (2,4 GHz) oder einer anderen Träger-Hochfrequenz erfolgen.

Auf einer dem Benutzer zugewandten Aussenfläche der Getränkebereitungsmaschine 62 ist eine Benutzerschnittstelle 68 angeordnet, über welche manuell unterschiedliche Kaffeespezialitäten auswählbar sind. Diese Auswahl kann mittels Betätigung einer jeweiligen Taste erfolgen, welche einer bestimmten Kaffeespezialität zugewiesen ist. Über die Benutzerschnittstelle 68 können selbstverständlich auch weitere Eingaben erfolgen, wie beispielsweise die gewünschte Menge der ausgewählten Kaffeespezialität, Temperatur, Aroma, zusätzliche Zubereitungsoptionen, Angaben hinsichtlich der Zubereitung der Milch oder des Milchschaums, usw.

Es ist ferner eine Datenbank 70 vorgesehen, welche eine Information über ein notwendiges Milchvolumen zur Zubereitung einer jeweils an der Benutzerschnittstelle 68 auswählbaren Kaffeespezialität gespeichert hält. In diese Information fliesst auch die Angabe der jeweils gewünschten Menge ein. Die Datenbank 70 ist im vorliegenden Beispiel als integraler Bestandteil der Steuerungselektronik 63 realisiert.

Der Sender/Empfänger 66, die Benutzerschnittstelle 68 und die Datenbank 70 sind jeweils elektrisch mit einer Entscheidungslogik 72 verbunden, welche im vorliegenden Beispiel als integraler Bestandteil der Steuerungselektronik 63 realisiert ist. Nach der Eingabe der gewünschten Kaffeespezialität über die Benutzerschnittstelle 68 liest die Entscheidungslogik 72 in Ansprechen auf diese Eingabe eine Information über ein hierzu notwendiges Milchvolumen aus der Datenbank 70 aus. Ferner vergleicht die Entscheidungslogik 72 diese Information mit der über den Sender/Empfänger 66 empfangenen Information über den Füllzustand des Milchbehälters. Auf Basis dieses Vergleichs entscheidet die Entscheidungslogik 72, ob das im Milchbehälter 10 enthaltene Milchvolumen grösser ist als das zur Zubereitung der jeweils ausgewählten Kaffeespezialität notwendige Milchvolumen oder nicht. Auf Basis dieser Entscheidung gibt die Entscheidungslogik 72 ein Freigabe-Signal oder ein Nicht-Freigabe-Signal zur Freigabe oder Nicht-Freigabe einer Milchabgabe aus der Milchabgabevorrichtung 64 aus.

Dieses Signal wird einem elektrisch ansteuerbaren Fluidventil 74 eingegeben, welches elektrisch mit dem Ausgang der Entscheidungslogik 72 verbunden ist. Das Fluidventil 74 kann beim Anlegen des Freigabe-Signals einen Fluiddurchgang zum Durchleiten eines Dampfbezuges durch die Milchabgabevorrichtung 64 öffnen. Liegt hingegen das Nicht-Freigabe-Signal an, so belässt das Fluidventil 74 diesen Fluiddurchgang geschlossen. Es können weitere Bauelemente mit dem Ausgang der Entscheidungslogik 72 verbunden sein, welche, sobald das Freigabe-Signal anliegt, Vorbereitungen zur Abgabe eines Dampf-/Milchbezuges treffen. Beispielsweise kann ein Thermoelement 76 zur Dampferzeugung angesteuert werden.

Die Milchabgabevorrichtung 64 enthält eine Kammer 78 zum Erzeugen eines Unterdrucks, sobald Dampf durch diese Kammer 78 hindurch geleitet wird. Dieser Unterdruck wird auf Basis des Venturi-Prinzips erzeugt. Die Kammer 78 steht wiederum mit dem Milcheinlass 64.1 in Fluidverbindung, sodass auch am Milcheinlass 64.1 ein Unterdruck erzeugt wird, sobald Dampf durch die Kammer 78 hindurch geleitet wird. Durch diesen Unterdruck wird wiederum Milch aus dem Milchkühler 10 angesaugt. Die angesaugte Milch wird in der Kammer 78 mit dem Dampf vermischt und erwärmt und/oder aufgeschäumt. Hierzu kann ein in der Figur nicht dargestellter Lufteinlass bereitgestellt sein, über welchen Aussenluft in die Kammer 78 eingelassen wird. Die jeweils zubereitete Kaffeespezialität wird über einen Auslass der Milchabgabevorrichtung 64 in einen darunter platzierten Becher 80 abgegeben.

In diesem Beispiel wurde die Milchabgabevorrichtung 64 als eine Vorrichtung beschrieben, welche einen Milchbezug durch Zugabe von Dampf und/oder Luft zubereitet und hierbei Milch, erwärmte Milch und/oder aufgeschäumte Milch ausgibt. Zuvor kann ein jeweiliger Bezug eines schwarzen Kaffee oder Espresso durch eine weitere, separate Abgabevorrichtung (nicht gezeigt) ausgegeben werden. Es sind auch Abgabevorrichtungen bekannt, welche sowohl einen schwarzen Kaffee oder Espresso als auch Milch, erwärmte Milch und/oder aufgeschäumte Milch abgeben.

Die Getränkebereitungsmaschine 62 kann ebenfalls ein vom Sender des Milchkühlers ausgesendetes Temperatursignal empfangen, welches eine Information über die Temperatur des Milchvolumens im Milchbehälter des Milchkühlers enthält. Diese Information kann an einer Anzeigevorrichtung 82 angezeigt werden, welche ebenfalls an der dem Benutzer zugewandten Aussenfläche der Getränkebereitungsmaschine 62 angebracht ist. Ferner kann an der Anzeigevorrichtung 82 eine Information über den Füllzustand des Milchbehälters angezeigt werden. Somit wird der Benutzer jederzeit und gut sichtbar über den Füllzustand des Milchbehälters und zugleich über die Temperatur des Milchvolumens informiert:

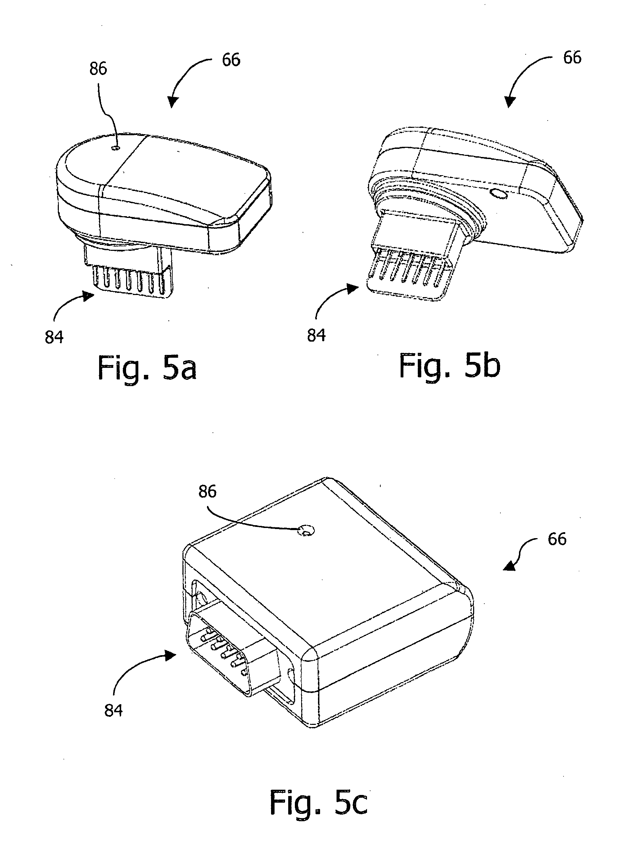

Figuren 5a, b zeigen den in Figur 4 schematisch angezeigten Sender/Empfänger 66 in zwei unterschiedlichen Perspektivansichten. Dieser Sender/Empfänger 66 enthält einen Stecker 84, welcher von aussen in eine komplementäre Buchse der Getränkebereitungsmaschine (beide nicht gezeigt) eingesteckt werden kann. Der Stecker 84 ist im vorliegenden Beispiel ein Spezialstecker für eine proprietäre Schnittstelle, welche für jeweilige Anforderungen optimiert ist. An einer für den Benutzer gut zugänglichen Aussenfläche des Sender/Empfängers 66 ist eine Empfänger-Taste 86 bereitgestellt. Bei einer Erstinbetriebnahme oder einem Austausch der Getränkebereitungsmaschine 62, des Sender/Empfängers 66 oder des Deckels 24 des Milchkühlers 10 muss diese Taste 86 am Sender/Empfänger 66 betätigt werden. Zeitgleich muss eine Taste 58 auf der Oberseite des Deckels 24 des Milchkühlers 10 betätigt werden, sodass sich der Sender 38 und der Sender/Empfänger 66 durch Austausch eines Signalisierungsprotokolls gegenseitig erkennen, zuordnen und koppeln können.

Figur 5c zeigt den Sender/Empfänger 66 in einer geänderten Ausgestaltung. Dieser Sender/Empfänger 66 hat einen Stecker 84 einer standardisierten Schnittstelle, beispielsweise ein D-Sub-Stecker, RS-232-Stecker, USB-Stecker, usw. Auf der Oberseite des Sender/Empfängers 66 ist ebenfalls die Empfänger-Taste 86 zur Auslösung des Signalisierungsprotokolls zur Zuordnung und Kopplung eines zu dem Sender/Empfänger 66 zugehörigen Senders angeordnet. Der Sender/Empfänger 66 ist - unabhängig von der Ausgestaltung - zum Senden und/oder Empfangen eines Informationssignals ausgelegt.

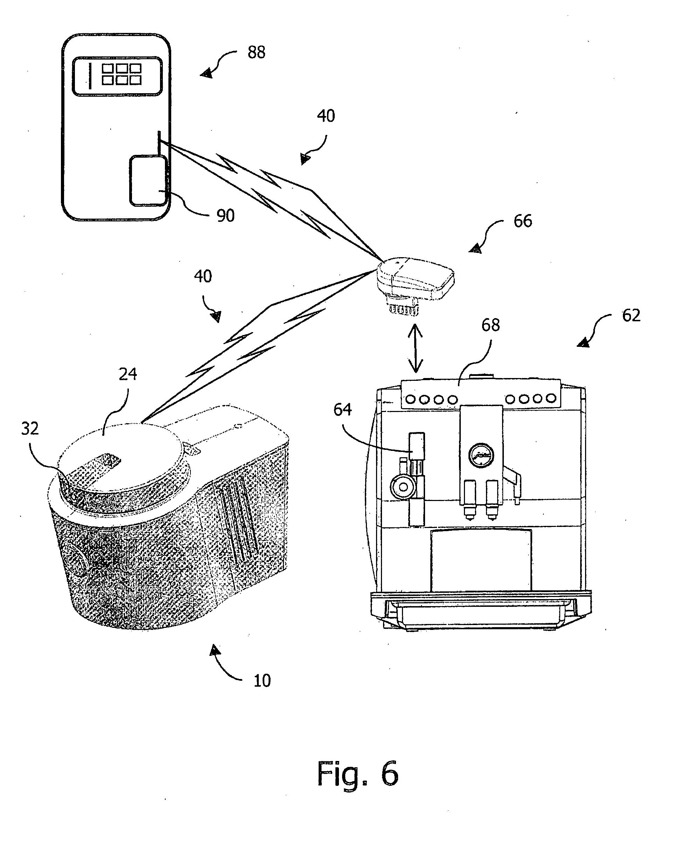

Figur 6 zeigt eine schematische Darstellung einer Kombination aus dem Milchkühler 10 und der Getränkebereitungsmaschine 62. Der Deckel 24 des Milchkühlers 10 enthält einen (nicht gezeigten) Sender, welcher über die Luftschnittstelle 40 mit dem Sender/Empfänger 66 kommuniziert, welcher wiederum elektrisch mit der Steuerungselektronik (nicht gezeigt) der Getränkebereitungsmaschine 62 verbunden ist. Der Sender sendet eine Information über den Füllzustand des Milchbehälters (nicht gezeigt) des Milchkühlers 10 an den Sender/Empfänger 66. Auf Basis dieser Information entscheidet eine Entscheidungslogik (nicht gezeigt) innerhalb der Getränkebereitungsmaschine 62, ob das im Milchbehälter des Milchkühlers 10 enthaltene Milchvolumen zur Zubereitung einer jeweils an der Benutzerschnittstelle 68 ausgewählten Kaffeespezialität ausreicht. Falls das Milchvolumen nicht ausreicht, wird kein Milchbezug angefordert. Falls das Milchvolumen ausreicht, saugt die Milchabgabevorrichtung 64 an der Getränkebereitungsmaschine 62 über einen Milchschlauch (nicht gezeigt) zwischen der Milchabgabevorrichtung 64 und dem Milchauslass 32 am Deckel 24 das entsprechend benötigte Milchvolumen an. Die Milch wird dann in der Milchabgabevorrichtung 64 durch einen Dampfbezug entweder lediglich angesaugt, erwärmt und/oder aufgeschäumt.

Ferner kann die Kombination ein Beistellgerät 88 mit einer Funkeinrichtung 90 umfassen. Dieses Beistellgerät 88 kann im Zusammenwirken mit der Getränkebereitungsmaschine 62 eingesetzt werden. Die Getränkebereitungsmaschine 62 kann somit leitungsungebunden über den Zustand dieses Beistellgeräts 88 informiert werden. Beispielsweise kann das Beistellgerät 88 als ein Abrechnungssystem implementiert sein (Münz- oder Jetons-Zähler, Schlüssel U-Key, Karten mit virtuellem Guthaben, Kreditkarten), indem der Getränkebereitungsmaschine 62 der bezahlte Betrag gemeldet wird und diese daraufhin den Bezug einer Kaffeespezialität freischaltet oder sperrt. Die Funkeinrichtung 90 kann ferner im Servicefall oder bei der Geräteproduktion eingesetzt werden, um einen elektronischen Speicher der Getränkebereitungsmaschine 62 ein- oder aus zulesen.

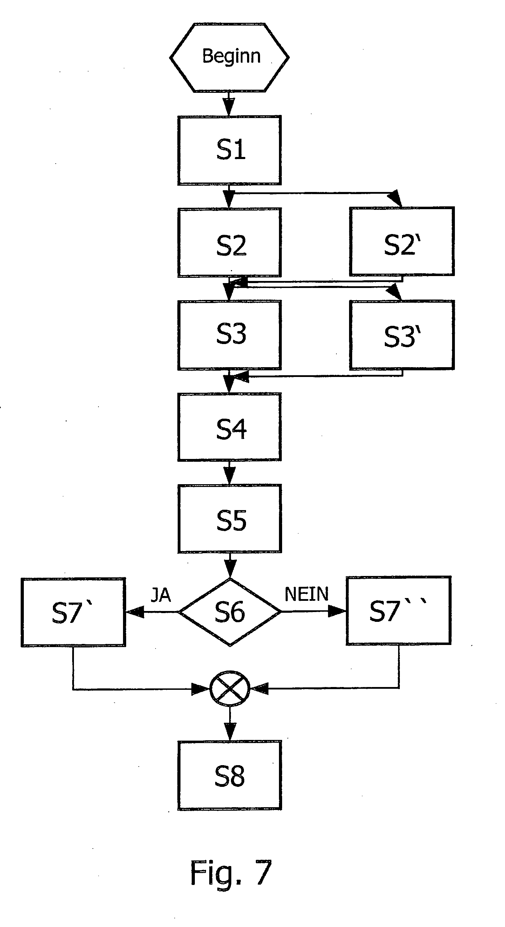

Figur 7 zeigt ein Ablaufdiagramm eines Verfahrens zum Beziehen eines Milchvolumens aus dem Milchkühler an die Milchabgabevorrichtung der Getränkebereitungsmaschine.

Der Beginn des Verfahrens wird durch die Auswahl einer jeweiligen Kaffeespezialität über die Benutzerschnittstelle an der Getränkebereitungsmaschine ausgelöst.

In einem Schritt S1 wird der Füllzustand des Milchbehälters des Milchkühlers erfasst.

In einem Schritt S2 wird die Information über den Füllzustand des Milchbehälters über die Luftschnittstelle an die Getränkebereitungsmaschine gesendet.

Diese Information wird in einem Schritt S3 an die Entscheidungslogik der Getränkebereitungsmaschine angelegt.

In einem Schritt S4 wird die Information über die Benutzerauswahl der jeweils ausgewählten Kaffeespezialität, welche zuvor über die Benutzerschnittstelle der Getränkebereitungsmaschine eingegeben ist, an die Entscheidungslogik übertragen.

In einem Schritt S5 wird eine Information aus der Datenbank über ein jeweils notwendiges Milchvolumen zur zubereitung der jeweils ausgewählten Kaffeespezialität ausgelesen.

In einem Schritt S6 wird die Information über das notwendige Milchvolumen mit der Information über den Füllzustand des Milchbehälters verglichen. Wenn auf Basis des Vergleichs in Schritt S6 entschieden ist, dass der Füllzustand des Milchbehälters grösser als das notwendige Milchvolumen ist (JA), wird in einem Schritt S7' ein Freigabe-Signal ausgegeben. Wenn in Schritt S6 entschieden ist, dass der Füllzustand des Milchbehälters geringer als das notwendige Milchvolumen ist (NEIN), wird in einem Schritt S7'' ein Nicht-Freigabe-Signal ausgegeben.

In einem Schritt S8 wird das Freigabe-Signal oder Nicht-Freigabe-Signal an das elektrische Fluidventil der Milchabgabevorrichtung der Getränkebereitungsmaschine angelegt.

Der Schritt S2 kann einen Schritt S2' umfassen, welcher das Senden einer Information über die Temperatur des Milchvolumens im Milchbehälter über die Luftschnittstelle an die Getränkebereitungsmaschine enthält.

Der Schritt S3 kann einen Schritt S3' umfassen, welcher ein Anzeigen der Information über den Füllzustand des Milchbehälters und/oder über die Temperatur des Milchvolumens im Milchbehälter am Milchkühler und/oder an der Getränkebereitungsmaschine enthält.

## Patentansprüche

1. Kombination aus einer Getränkebereitungsmaschine (62) zur Bereitung eines Getränks und einem separaten Milchkühler (10) zur gekühlten Bevorratung eines Milchvolumens (16),
welche Getränkebereitungsmaschine (62)
eine Steuerungselektronik (63) und eine einen Milcheinlass (64.1) aufweisende Milchabgabevorrichtung (64) zur Abgabe von Milch und/oder Milchschaum umfasst,
welcher Milchkühler (10)
ein Gehäuse (11),
einen im Gehäuse (11) angeordneten Milchbehälter (14) zur Aufnahme des Milchvolumens (16),
eine Kühleinheit (18) zum Kühlen des Milchvolumens (16) und
eine Milchlanze (26) mit einem in den Milchbehälter (14) ragenden Ende und einem mit einem Milchauslass (32) des Milchkühlers (10) in Fluidverbindung stehen Ende zur Entnahme von Milch aus dem Milchbehälter (14) umfasst, wobei der Milcheinlass (64.1) der Milchabgabevorrichtung (64) mit dem Milchauslass (32) des Milchkühlers (10) mittels einer Milchleitung (32') verbunden oder verbindbar ist,
mit einer Überwachungseinrichtung zum Überwachen eines Füllzustands des Milchbehälters (14), welche einen im Milchbehälter (14) und/oder im Gehäuse (11) des Milchkühlers (10) angeordneten Füllzustands-Sensor (34) zum Erfassen eines Füllstands der Milch im Milchbehälter (14) und
eine mit dem Füllzustands-Sensor (34) verbundene Füllzustands-Messelektronik (36) zur Erzeugung eines Füllzustandsinformationssignals umfasst, welches Füllzustandsinformationssignal eine Information über den vom Füllzustands-Sensor (34) erfassten Füllstand enthält, wobei eine Abgabe der Milch und/oder des Milchschaums aus der Milchabgabevorrichtung (64) mittels der Steuerungselektronik (63) der Getränkebereitungsmaschine (62) in Abhängigkeit von dem von der Füllzustands-Messelektronik (36) erzeugten Füllzustandsinformationssignal steuerbar ist,
**dadurch gekennzeichnet, dass**
die Füllzustands-Messelektronik (36) im oder am Gehäuse des Milchkühlers (10) angeordnet ist,
der Milchkühler (10) einen Sender (38) zum Übertragen des von der Füllzustands-Messelektronik (36) erzeugten Füllzustandsinformationssignals an die Getränkebereitungsmaschine (62) über eine Luftschnittstelle (40) mittels eines vom Sender (38) erzeugbaren Funksignals umfasst, und
die Getränkebereitungsmaschine (62) einen Sender/-Empfänger (66) umfasst, welcher dazu ausgelegt ist, das vom Sender (38) des Milchkühlers (10) erzeugte Funksignal zu empfangen und das mittels des Funksignals übertragene Füllzustandsinformationssignal der Steuerungselektronik (63) der Getränkebereitungsmaschine (62) bereitzustellen.

2. Kombination nach Anspruch 1, wobei
das Gehäuse (11) des Milchkühlers (10) einen den Milchbehälter (14) umfassenden Milchbehälterkörper (12) und einen Deckel (24) zum Verschliessen oder Bedecken des Milchbehälters (14) aufweist.

3. Kombination nach Anspruch 2, wobei die Füllzustands-Messelektronik (36) und/oder der Sender (38) des Milchkühlers (10) in dem Deckel (24) enthalten sind.

4. Kombination nach Anspruch 2 oder 3, wobei der Füllzustands-Sensor (34) an einer Sensorlanze (60) angebracht ist, welche derart an der Unterseite des Deckels (24) befestigt ist, dass sie im Wesentlichen vollständig in den Milchbehälter (14) hineinragt, wenn der Deckel (24) derart angeordnet ist, dass er den Milchbehälter (14) bedeckt oder verschliesst.

5. Kombination nach einem der vorhergehenden Ansprüche, wobei die Füllzustands-Messelektronik (36) und/oder der Sender (38) über zumindest einen im oder am Gehäuse des Milchkühlers (10) angeordneten Energiespeicher (42) mit elektrischer Energie versorgbar sind.

6. Kombination nach einem der Ansprüche 2 -4, wobei die Füllzustands-Messelektronik (36) und/oder der Sender (38) des Milchkühlers (10) über eine an den Milchbehälterkörper (12) koppelbare externe elektrische Energiequelle (20) mit elektrischer Energie versorgbar sind.

7. Kombination nach Anspruch 6, wobei die externe elektrische Energiequelle (20) über eine Energieversorgungs-Schnittstelle (46) zwischen dem Milchbehälterkörper (12) und dem Deckel (24) elektrisch mit der Füllzustands-Messelektronik (36) und/oder dem Sender (38) des Milchkühlers (10) koppelbar ist.

8. Kombination nach Anspruch 7, wobei die Energieversorgungs-Schnittstelle (46) wenigstens zwei Schnittstellenelemente (46', 46'') enthält, welche jeweils am Milchbehälterkörper (12) und Deckel (24) derart ausgerichtet und angeordnet sind, dass miteinander elektrisch verbunden sind, wenn der Deckel (24) derart angeordnet ist, dass er den Milchbehälter (14) bedeckt oder verschliesst.

9. Kombination nach Anspruch 2, wobei die Füllzustands-Messelektronik (36) und/oder der Sender (38) im Milchbehälterkörper (12) enthalten sind.

10. Kombination nach Anspruch 9, wobei die Füllzustands-Messelektronik (36) und/oder der Sender (38) des Milchkühlers (10) über eine an den Milchbehälterkörper (12) koppelbare externe elektrische Energiequelle (20) mit elektrischer Energie versorgbar sind.

11. Kombination nach einem der Ansprüche 1 -10, wobei die Getränkebereitungsmaschine (62) enthält:
eine Benutzerschnittstelle (68), über welche manuell unterschiedliche Kaffeespezialitäten auswählbar sind,
eine Datenbank (70), welche eine Information über ein notwendiges Milchvolumen zur Zubereitung einer jeweils an der Benutzerschnittstelle (68) auswählbaren Kaffeespezialität gespeichert hält,
eine Entscheidungslogik (72) mit Eingängen, welche jeweils mit dem Sender/Empfänger (66), der Benutzerschnittstelle (68) und der Datenbank (70) verbunden sind, wobei die Entscheidungslogik (72) dazu ausgelegt ist, in Ansprechen auf eine Eingabe an der Benutzerschnittstelle (68) eine Information über ein hierzu notwendiges Milchvolumen aus der Datenbank (70) auszulesen, diese Information mit der empfangenen Information über den Füllzustand des Milchbehälters (14) zu vergleichen, und eine Milchabgabe aus der Milchabgabevorrichtung (64) nur unter der Bedingung auszugeben, dass das im Milchbehälter (14) enthaltene Milchvolumen (16) nicht kleiner als das zur Zubereitung der jeweils ausgewählten Kaffeespezialität notwendige Milchvolumen ist.

12. Kombination nach einem der Ansprüche 1-11, ferner mit zumindest einem Beistellgerät (88) mit einer Funkeinrichtung (90) zum Übertragen eines Beistellgerät-Informationssignals an die Getränkebereitungsmaschine (62) und/oder Empfangen eines Getränkebereitungsmaschine-Informationssignals von der Getränkebereitungsmaschine (62) über jeweils eine Luftschnittstelle (40).

13. Verfahren zum Abgeben von Milch und/oder Milchschaum mittels einer Kombination aus einer Getränkebereitungsmaschine (62) zur Bereitung eines Getränks und einem Milchkühler (10) zur gekühlten Bevorratung eines Milchvolumens (16) nach einem der Ansprüche 1 bis 12, mit den Schritten:
Erfassen (S1) eines Füllzustandes eines Milchbehälters (14) des Milchkühlers (10),
Senden (S2) einer Information über den Füllzustand des Milchbehälters (14) an die Getränkebereitungsmaschine (62) mittels eines Funksignals über eine Luftschnittstelle (40),
Anlegen (S3) dieser Information an eine Entscheidungslogik (72) der Getränkebereitungsmaschine (62),
Auswählen einer Kaffeespezialität über eine Benutzerschnittstelle (68) der Getränkebereitungsmaschine (62) und Übertragen (S4) einer Information über die ausgewählte Kaffeespezialität an die Entscheidungslogik (72),
Auslesen (S5) einer Information aus einer Datenbank (70) über ein jeweils notwendiges Milchvolumen zur Zubereitung einer jeweils ausgewählten Kaffeespezialität,
Vergleichen (S6) der Information über das notwendige Milchvolumen mit der Information über den Füllzustand des Milchbehälters (14), wobei die Entscheidungslogik (72) ein Freigabe-Signal zur Freigabe einer Abgabe einer Portion Milch und/oder Milchschaum erzeugt (S7'), wenn der Füllstand der Milch im Milchbehälters (14) nicht geringer als das notwendige Milchvolumen ist, und/oder wobei die Entscheidungslogik (72) ein Nicht-Freigabe-Signal zur Nicht-Freigabe einer Abgabe einer Portion Milch und/oder Milchschaum erzeugt (S7''), wenn der Füllstand der Milch im Milchbehälter (14) geringer als das notwendige Milchvolumen ist, und
Anlegen (S8) des Freigabe-Signals oder des Nicht-Freigabe-Signals an ein elektrisches Fluidventil (74) einer Milchabgabevorrichtung (64) der Getränkebereitungsmaschine (62).

14. Verfahren nach Anspruch 13, welches ferner den Schritt enthält:
Senden einer Information über die Temperatur des Milchvolumens (16) im Milchbehälter (14) an die Getränkebereitungsmaschine (62) über die Luftschnittstelle (40).

15. Verfahren nach Anspruch 13 oder 14, welches ferner den Schritt enthält:
Anzeigen einer Information über den Füllzustand des Milchbehälters (14) und/oder über die Temperatur des Milchvolumens (16) im Milchbehälter (14) am Milchkühler (10) und/oder an der Getränkebereitungsmaschine (62).

## Claims

1. A combination unit of a beverage preparation machine (62) to prepare a beverage and a separate milk chilling device (10) for the storing of a milk volume (16) in a chilled state,
said beverage preparation machine (62) comprises a control electronics system (63) and a milk dispensing apparatus (64) encompassing a milk inlet (64.1) for dispensing milk and/or milk froth,
said milk chilling device (10) comprises a housing (11),
a milk container (14) arranged in the housing (11) for accommodating the milk volume (16),
a chilling unit (18) for chilling the milk volume (16) and
a milk lance (26) comprising an end projecting into the milk container (14) and an end, which is fluidically connected to a milk outlet (32) of the milk chilling device (10), for removing milk from the milk container (14), wherein the milk inlet (64.1) of the milk dispensing apparatus (64) is connected or can be connected to the milk outlet (32) of the milk chilling device (10) by means of a milk line (32'),
comprising a monitoring means for monitoring a filling state of the milk container (14), which comprises a filling state sensor (34) arranged in the milk container (14) and/or in the housing (11) of the milk chilling device (10) for detecting a filling level of the milk in the milk container (14) and
a filling state measuring electronics system (36) connected to the filling state sensor (34) for generating a filling state information signal, said filling state information signal contains information relating to the filling level detected by the filling state sensor (34),
wherein a dispensing of the milk and/or of the milk froth from the milk dispensing apparatus (64) can be controlled by means of the control electronics system (63) of the beverage preparation machine (62) as a function of the filling state information signal generated by the filling state measurement electronics system (36),
**characterized in that**
the filling state measuring electronics system (36) is arranged in or on the housing of the milk chilling device (10),
the milk chilling device (10) comprises a transmitter (38) for transmitting the filling state information signal generated by the filling state measurement electronics system (36) to the beverage preparation machine (62) via an air interface (40) by means of a radio signal, which can be generated by the transmitter (38), and
the beverage preparation machine (62) comprises a transmitter/receiver (66), which is designed to receive the radio signal generated by the transmitter (38) of the milk chilling device (10) and to provide the filling state information signal transmitted by means of the radio signal to the control electronics system (63) of the beverage preparation machine (62).

2. The combination unit according to claim 1, wherein the housing (11) of the milk chilling device (10) encompasses a milk container body (12), which comprises the milk container (14), and a lid (24) for closing or covering the milk container (14).

3. The combination unit according to claim 2, wherein the filling state measuring electronics (36) and/or the transmitter (38) of the milk chilling device (10) are contained in the lid (24).

4. The combination unit according to claim 2 or 3, wherein the filling state sensor (34) is attached to a sensor lance (60), which is fastened to the bottom side of the lid (24) such that it projects substantially completely into the milk container (14) when the lid (24) is arranged such that it covers or closes the milk container (14).

5. The combination unit according to one of the preceding claims, wherein the filling state measuring electronics system (36) and/or the transmitter (38) can be supplied with electrical energy via at least one energy storage (42), which is arranged in or on the housing of the milk chilling device (10).

6. The combination unit according to one of claims 2-4, wherein the filling state measuring electronics system (36) and/or the transmitter (38) of the milk chilling device (10) can be supplied with electrical energy via an external electrical energy source (20), which can be coupled to the milk container body (12).

7. The combination unit according to claim 6, wherein the external electrical energy source (20) can be coupled electrically to the filling state measuring electronics system (36) and/or the transmitter (38) of the milk chilling device (10) via an energy supply interface (46) between the milk container body (12) and the lid (24).

8. The combination unit according to claim 7, wherein the energy supply interface (46) contains at least two interface elements (46', 46"), which are in each case oriented and arranged on the milk container body (12) and on the lid (24) such that they are electrically connected to one another when the lid (24) is arranged such that it covers or closes the milk container (14).

9. The combination unit according to claim 2, wherein the filling state measuring electronics system (36) and/or the transmitter (38) are contained in the milk container body (12).

10. The combination unit according to claim 9, wherein the filling state measuring electronics system (36) and/or the transmitter (38) of the milk chilling device (10) can be supplied with electrical energy via an external electrical energy source (20), which can be coupled to the milk container body (12).

11. The combination unit according to one of claims 1-10, wherein
the beverage preparation machine (62) contains;
a user interface (68), via which different coffee specialties can be chosen manually,
a database (70), which stores information relating to a necessary milk volume to prepare a coffee specialty, which can in each case be selected at the user interface (68),
a decision logic (72) comprising inputs, which are in each case connected to the transmitter/receiver (66), the user interface (68) and the database (70), wherein the decision logic (72) is designed to read out information relating to a milk volume, which is necessary for this, from the database (70) in response to an input at the user interface (68), to compare this information with the received information relating to the filling state of the milk container (14), and to only dispense milk from the milk dispensing apparatus (64) under the condition that the milk volume (16) contained in the milk container (14) is not smaller than the milk volume, which is necessary to prepare the respective selected coffee specialty.

12. The combination unit according to one of claims 1-11, further comprising at least one auxiliary unit (88) comprising a radio device (90) for transmitting an auxiliary unit information signal to the beverage preparation machine (62) and/or for receiving a beverage preparation machine information signal from the beverage preparation machine (62) via one air interface (40), in each case.

13. A method for dispensing milk and/or milk froth by means of a combination unit of a beverage preparation machine (62) to prepare a beverage and a milk chilling device (10) for the storing of milk volume (16) in a chilled state according to one of claims 1 to 12, comprising the steps:
detecting (S1) a filling state of a milk container (14) of the milk chilling device (10),
transmitting (S2) information relating to the filling state of the milk container (14) to the beverage preparation machine (62) by means of a radio signal via an air interface (40),
applying (S3) this information to a decision logic (72) of the beverage preparation machine (62),
selecting a coffee specialty via a user interface (68) of the beverage preparation machine (62) and transferring (S4) information relating to the selected coffee specialty to the decision logic (72),
reading out (S5) information relating to a respective necessary milk volume to prepare a respective chosen coffee specialty from a database (70),
comparing (S6) the information relating to the necessary milk volume to the information relating to the filling state of the milk container (14), wherein the decision logic (72) generates a release signal for releasing a dispensing of a portion of milk and/or milk froth (S7') when the filling level of the milk in the milk container (14) is not less than the necessary milk volume, and/or wherein the decision logic (72) generates a non-release signal for the non-release of the dispensing of a portion of milk and/or milk froth (S7"), when the filling level of the milk in the milk container (14) is less than the necessary milk volume, and
applying (S8) the release-signal or the non-release signal to an electrical fluid valve (74) of a milk dispensing apparatus (64) of the beverage preparation machine (62).

14. The method according to claim 13, which further contains the step;
transmitting information relating to the temperature of the milk volume (16) in the milk container (14) to the beverage preparation machine (62) via the air interface (40.

15. The method according to claim 13 or 14, which further comprises the step:
displaying information relating to the filling state of the milk container (14) and/or relating to the temperature of the milk volume (16) in the milk container (14) at the milk chilling device (10) and/or at the beverage preparation machine (62).

## Revendications

1. Association d'un appareil de préparation de boissons (62) pour préparer une boisson et d'un refroidisseur de lait (10) séparé pour l'approvisionnement réfrigéré d'un volume de lait (16),
lequel appareil de préparation de boissons (62) comprend un système électronique de commande (63) et un dispositif distributeur de lait et/ou de mousse de lait (64) comportant une entrée pour le lait (64.1),
lequel refroidisseur de lait (10) comprend un bâti (11),
un réservoir de lait (14) placé dans le bâti (11), destiné à recevoir le volume de lait (16),
une unité de refroidissement (18) pour refroidir le volume de lait (16) et
une lance à lait (26) avec une extrémité saillant dans le réservoir à lait (14) et une extrémité qui est en liaison par fluide avec une sortie de lait (32) du refroidisseur de lait (10) pour prélever du lait dans le réservoir de lait (14), l'entrée de lait (64.1) du dispositif distributeur de lait (64) étant reliée ou pouvant être reliée avec la sortie pour le lait (32) du refroidisseur de lait (10) au moyen d'un conduit de lait (32'),
avec un système de surveillance pour surveiller un état de remplissage du réservoir de lait (14), lequel comprend un capteur d'état de remplissage (34) placé dans le réservoir de lait (14) et/ou dans le bâti (11) du refroidisseur de lait (10) pour détecter un état de remplissage du lait dans le réservoir de lait (14) et
un système de mesure électronique (36) relié au capteur d'état de remplissage (34) pour générer un signal d'information sur l'état de remplissage, lequel signal d'information sur l'état de remplissage contient une information sur l'état de remplissage capté par le capteur d'état de remplissage (34), une distribution du lait et/ou de la mousse de lait à partir du dispositif distributeur de lait (64) pouvant être commandée au moyen du système électronique de commande (63) de l'appareil de préparation de boissons (62), en fonction du signal d'information sur l'état de remplissage généré par le système électronique de mesure (36) de l'état de remplissage,
**caractérisé en ce que**
le système électronique de mesure (36) de l'état de remplissage est placé dans ou sur le bâti du refroidisseur de lait (10),
le refroidisseur de lait (10) comprend un émetteur (38) pour transmettre à l'appareil de préparation de boissons (62) le signal d'information sur l'état de remplissage généré par le système électronique de mesure (36) de l'état de remplissage par l'intermédiaire d'une interface aérienne (40), au moyen d'un signal radio pouvant être généré par l'émetteur (38) et
l'appareil de préparation de boissons (62) comprend un émetteur/récepteur (66) qui est conçu pour réceptionner le signal radio généré par l'émetteur (38) du refroidisseur de lait (10) et pour mettre à disposition le signal d'information sur l'état de remplissage du système électronique de commande (63) de l'appareil de préparation de boissons (62) transmis au moyen du signal radio.

2. Association selon la revendication 1, le bâti (11) du refroidisseur de lait (10) comportant un corps de réservoir de lait (12) comprenant le réservoir de lait (14) et un couvercle (24) pour fermer ou pour couvrir le réservoir de lait (14).

3. Association selon la revendication 2, le système électronique de mesure (36) de l'état de remplissage et/ou l'émetteur (38) du refroidisseur de lait (10) étant contenus dans le couvercle (24).

4. Association selon la revendication 2 ou 3, le capteur d'état de remplissage (34) étant monté sur une lance de capteur (60), laquelle est fixée sur la face inférieure du couvercle (24) de sorte à saillir de manière sensiblement complète dans le réservoir de lait (14) lorsque le couvercle (24) est placé de telle sorte qu'il recouvre ou ferme le réservoir de lait (14).

5. Association selon l'une quelconque des revendications précédentes, le système électronique de mesure (36) de l'état de remplissage et/ou l'émetteur (38) pouvant être alimentés en énergie électrique par l'intermédiaire d'au moins un accumulateur d'énergie (42) placé dans ou sur le bâti du refroidisseur de lait (10).

6. Association selon l'une quelconque des revendications 2 à 4, le système électronique de mesure (36) de l'état de remplissage et/ou l'émetteur (38) du refroidisseur de lait (10) pouvant être alimentés en énergie électrique par l'intermédiaire d'une source d'énergie électrique (20) externe qui susceptible de s'accoupler sur le corps (12) du réservoir de lait.

7. Association selon la revendication 6, la source d'énergie électrique (20) externe étant susceptible de s'accoupler électriquement sur le système électronique de mesure (36) de l'état de remplissage et/ou sur l'émetteur (38) du refroidisseur de lait (10) par l'intermédiaire d'une interface d'alimentation en énergie (46) entre le corps (12) du réservoir de lait et le couvercle (24).

8. Association selon la revendication 7, l'interface d'alimentation en énergie (46) contenant au moins deux éléments d'interface (46', 46'') lesquels sont chacun aligné et placé sur le corps (12) du réservoir de lait et sur le couvercle (24), de sorte à être électriquement raccordés l'un à l'autre lorsque le couvercle (24) est placé de sorte à recouvrir ou à fermer le réservoir de lait (14).

9. Association selon la revendication 2, le système électronique de mesure (36) de l'état de remplissage et/ou l'émetteur (38) étant contenus dans le corps (12) du réservoir de lait.

10. Association selon la revendication 9, le système électronique de mesure (36) de l'état de remplissage et/ou l'émetteur (38) du refroidisseur de lait pouvant être alimentés en énergie électrique par l'intermédiaire d'une source d'énergie électrique (20) externe susceptible de s'accoupler sur le corps (12) du réservoir de lait.

11. Association selon l'une quelconque des revendications 1 à 10, l'appareil de préparation de boissons (62) contenant :
une interface utilisateur (68), par l'intermédiaire de laquelle différentes spécialités à base de café sont manuellement sélectionnables,
une base de données (70) qui contient en mémoire une information sur un volume de lait nécessaire pour la préparation d'une spécialité à base de café chaque fois sélectionnable sur l'interface utilisateur (68),
une logique décisionnelle (72) avec des entrées qui sont reliées chacune avec l'émetteur/récepteur (66), avec l'interface utilisateur (68) et avec la base de données (70), la logique décisionnelle (72) étant conçue pour lire dans la base de données (70), en réponse à une saisie sur l'interface utilisateur (68) une information sur un volume de lait nécessaire à cet effet, pour comparer ladite information avec l'information réceptionnée sur l'état de remplissage du réservoir de lait (14) et à ne distribuer une sortie de lait hors du dispositif distributeur de lait (64) que sous la condition que le volume de lait (16) contenu dans le réservoir de lait (14) ne soit pas inférieur au volume de lait nécessaire pour la spécialité à base de café respectivement sélectionnée.

12. Association selon l'une quelconque des revendications 1 à 11, par ailleurs avec au moins un appareil de mise à disposition (88) avec un système radio (90) pour transmettre un signal d'information de l'appareil de mise à disposition à l'appareil de préparation de boissons (62) et/ou pour réceptionner un signal d'information de l'appareil de préparation de boissons de la part de l'appareil de préparation de boissons (62) par l'intermédiaire de chaque fois une interface aérienne (40).

13. Procédé de distribution de lait et/ou de mousse de lait au moyen d'une association d'un appareil de préparation de boissons (62) destiné à préparer une boisson et d'un refroidisseur de lait (10) pour l'approvisionnement réfrigéré d'un volume de lait (16) selon l'une quelconque des revendications 1 à 12, comportant les étapes :
détection (S1) d'un état de remplissage d'un réservoir de lait (14) du refroidisseur de lait (10),
émission (S1) d'un état de remplissage du réservoir de lait (14) à l'appareil de préparation de boissons (62) au moyen d'un signal radio par l'intermédiaire d'une interface aérienne (40),
application (S3) de ladite information à une logique décisionnelle (72) de l'appareil de préparation de boissons (62),
choix d'une spécialité à base de café par l'intermédiaire d'une interface utilisateur (68) de l'appareil de préparation de boissons (62) et transmission (S4) d'une information sur la spécialité à base de café sélectionnée à la logique décisionnelle (72),
lecture (S5) d'une information dans une base de données (70) sur un volume de lait respectivement nécessaire pour la préparation d'une spécialité à base de café respectivement sélectionnée,
comparaison (S6) de l'information sur le volume de lait nécessaire avec l'information sur l'état de remplissage du réservoir de lait (14), la logique décisionnelle (72) générant (S7') un signal de validation pour valider une distribution d'une portion de lait et/ou de mousse de lait lorsque l'état de remplissage du lait dans le réservoir de lait (14) n'est pas inférieur au volume de lait nécessaire et/ou la logique décisionnelle (72) générant (S7'') un signal de non-validation pour la non-validation d'une distribution d'une portion de lait et/ou de mousse de lait lorsque l'état de remplissage du lait dans le réservoir de lait (14) est inférieur au volume de lait nécessaire et
application (S8) du signal de validation ou du signal de non-validation à une soupape à fluide (74) électrique d'un dispositif distributeur de lait (64) de l'appareil de préparation de boissons (62).

14. Procédé selon la revendication 13, contenant par ailleurs l'étape :
émission d'une information sur la température du volume de lait (16) dans le réservoir de lait (14) à l'appareil de préparation de boissons (62) par l'intermédiaire de l'interface aérienne (40).

15. Procédé selon la revendication 13 ou 4, contenant par ailleurs l'étape :
affichage d'une information sur l'état de remplissage du réservoir de lait (14) et/ou sur la température du volume de lait (16) dans le réservoir de lait (14) à l'attention du refroidisseur de lait (10) et/ou de l'appareil de préparation de boissons (62).
